# NEUE EUROPÄISCHE PATENTSCHRIFT

(11) **EP 2 247 517 B2**
(45) Veröffentlichungstag und Bekanntmachung des Hinweises auf die Entscheidung über den Einspruch: **16.11.2016**
(45) Hinweis auf die Patenterteilung: 15.05.2013
(21) Anmeldenummer: 09705283.1
(22) Anmeldetag: 27.01.2009
(51) Int. Cl.: B65G 61/00, B65G 57/11

(54) **KOMMISSIONIERSYSTEM UND VERFAHREN ZUR BELADUNG EINES LADUNGSTRÄGERS**
PICKING SYSTEM AND METHOD FOR LOADING A LOAD-CARRYING UNIT
SYSTÈME DE PRÉPARATION DE COMMANDES ET PROCÉDÉ DE CHARGEMENT D'UN SUPPORT DE CHARGE

(30) Priorität: 28.01.2008 AT 1272008; 01.10.2008 AT 15332008
(43) Veröffentlichungstag der Anmeldung: 10.11.2010
(73) Patentinhaber: TGW Mechanics GmbH, 4600 Wels (AT)
(72) Erfinder: WOLKERSTORFER, Christoph, A-4600 Wels (AT)
(74) Vertreter: Burger, Hannes
(86) Internationale Anmeldenummer: PCT/AT2009/000027
(87) Internationale Veröffentlichungsnummer: WO 2009/094681

(56) Entgegenhaltungen:
- EP-A- 0 799 780
- EP-A- 1 462 394
- DE-A1- 3 017 612
- JP-A- 7 267 366
- NL-C2- 1 023 904
- US-A1- 2007 280 812

## Beschreibung

Die Erfindung betrifft ein Kommissioniersystem nach dem Oberbegriff des Anspruchs 1 und ein Verfahren nach den korrespondierenden Ansprüchen 10 und 11 zum manuellen oder automatisierten Beladen eines Ladungsträgers, insbesondere einer Palette, mit einen Ladestapel bildenden Ladeeinheiten.

Aus der gattungsgemäßen NL 1 023 904 C2 ist eine Vorrichtung zur Beladung eines Ladungsträgers mit Koffer bekannt, die eine Positionierfördereinrichtung aufweist, mittels welcher die Koffer auf den Ladungsträger an von einem Rechnersystem festgelegten Ladepositionen abgelegt werden. Die Beladeposition wird vom Rechnersystem dadurch ermittelt, dass der Beladungszustand auf dem Ladungsträger mit Fördereigenschaften der Koffer verknüpft und festgestellt wird, welcher Koffer in welche Lücke im Stapel abgelegt werden kann. Die Positionierfördereinrichtung weist in einem einstellbaren Abstand angeordnete Förderbahnen auf.

Eine Vorrichtung zum automatisierten Beladen eines Ladungsträgers mit einen Ladestapel bildenden Ladeeinheiten ist aus der EP 1 462 394 B1 bekannt, die eine Zuführeinrichtung, eine ortsfeste Ladeplatte, eine Beschikkungsfördereinrichtung zum Verschieben einer Ladeeinheit auf und relativ zu der ortsfesten Ladeplatte in einer Richtung (x-Richtung) horizontal längs des Ladungsträgers und eine Positionierfördereinrichtung zum Ergreifen einer Ladeeinheit auf der Ladeplatte und zum Verfahren der Ladeeinheit in Richtung der Ladetiefe des Ladungsträgers (z-Richtung) sowie einen oberhalb der Positionierfördereinrichtung angeordneten Abstreifer aufweist, der unabhängig von der Positionierfördereinrichtung in z-Richtung verfahrbar ist und zum Rückhalten der Ladeeinheit an der gewünschten Position auf dem Ladestapel dient. Der Ladungsträger wird nach einer bezüglich der Stabilität und/oder Volumenausnutzung optimierten, räumlichen Beladungskonfiguration der Ladeeinheiten im Ladestapel beladen. Aus der Beladungskonfiguration wird eine Beladungsreihenfolge ermittelt, entsprechend der die Ladeeinheiten auf die ortsfeste Ladeplatte vereinzelt angefördert werden, wo eine einzelne Ladeeinheit von der Beschickungsfördereinrichtung in x-Richtung bis zu der vorgesehenen x-Position der Ladeeinheit in der Beladungskonfiguration des Ladestapels bewegt wird. Anschließend wird die Ladeeinheit mittels des Abstreifers auf die in z-Richtung vorragende Positionierfördereinrichtung geschoben und mittels dieser in z-Richtung bis zu der vorgesehenen z-Position in der Beladungskonfiguration des Ladestapels bewegt. Danach wird die Positionierfördereinrichtung zurückgefahren, während der Abstreifer zunächst in seiner Position verharrt, wodurch die Ladeeinheit an der für diese vorgesehene z-Position auf dem Ladestapel abgelegt wird. Anschließend werden die Positionierfördereinrichtung und der Abstreifer wieder zurückgefahren. Die Positionierung einer Ladeeinheit im Ladestapel in y-Richtung wird durch Anheben bzw. Absenken des Ladungsträgers erreicht.

Aus der JP 11-020945 A ist eine Vorrichtung zur automatisierten Beladung eines auf einem Hubtisch auflastenden Ladungsträgers mit Ladeeinheiten bekannt, die eine über eine erste Verstellvorrichtung in einer Richtung (x-Richtung) horizontal längs des Ladungsträgers und über eine zweite Verstellvorrichtung in Richtung der Ladetiefe des Ladungsträgers (z-Richtung) bewegbare Positionierfördereinrichtung aufweist, die als Bandförderer ausgebildet ist. An die Positionierfördereinrichtung schließt eine Zufördereinheit an, deren stromabwärts angeordnetes Ende in x- und z-Richtung verstellbar ist.

Die bekannten Vorrichtungen zum automatisierten Beladen eines Ladungsträgers verwenden eine Positionierfördereinrichtung mit einer auf das vielseitige Spektrum der Ladeeinheiten festgelegten Breite. Die Breite wird an die Ladeeinheit größter Dimension angepasst, sodass eine Lücke in einer Stapellage zwischen bereits auf den Ladungsträger gestapelten benachbarten Ladeeinheiten oder zwischen einer Ladeeinheit und einem Wandteil einer Stapelhilfe nicht bedient werden kann, wenn die Breite der Positionierfördereinrichtung größer ist als eine Lückenweite. Aufgrund der verbleibenden Lücken zwischen den Ladeeinheiten oder im Randbereich des Ladestapels, ist eine Optimierung der Volumenausnutzung im Ladestapel nur beschränkt möglich.

Die EP 0 799 780 A1 beschreibt eine Vorrichtung zur Beladung eines Ladungsträgers, bei der die auf einer Zuführeinrichtung angeförderten Ladeeinheiten von einer Ausrichtvorrichtung zwischen Ausrichtplatten relativ zur Zuführeinrichtung positioniert werden.

Aus der DE 30 17 612 A1 ist ein Kommissioniersystem bekannt, bei dem Schächte über eine Positionierfördereinrichtung mit Ladeeinheiten beschickt werden, wobei die Positionierfördereinrichtung eine in Förderrichtung der Ladeeinheiten zu deren vorderen Ende geneigt nach unten verlaufende Förderebene ausbildet.

Auch sind aus dem Stand der Technik Kommissioniersysteme bekannt, bei denen Ladeeinheiten manuell auf einen Ladungsträger gestapelt werden. Die Ladeeinheiten werden vereinzelt auf einer Positionierfördereinrichtung bereitgestellt, von einer Kommissionierperson ergriffen und auf dem Ladungsträger an geeigneten Beladepositionen gestapelt. Für die Kommissionierperson ergeben sich ergonomisch ungünstige Bedienungen, insofern als die Zugänglichkeit und Greifbarkeit der Ladeeinheiten unberücksichtigt bleibt.

Aufgabe der Erfindung ist es, eine Vorrichtung und ein Verfahren zum manuellen bzw. automatisierten Beladen eines Ladungsträgers mit Ladeeinheiten zu schaffen, das sich gegenüber dem Stand der Technik selbst bei Ladeeinheiten mit verschiedensten Eigenschaften, wie Dimensionen, Beschaffenheit und dgl., noch effizienter gestalten lässt.

Die Aufgabe der Erfindung wird durch die Merkmale und Maßnahmen der Ansprüche 1, 10 und 11 gelöst. Das Kommissioniersystem bzw. Kommissionierverfahren eignet sich zur manuellen oder automatisierten Beladung eines Ladungsträgers, insbesondere einer Auftragspalette mit Ladeeinheiten.

Von Vorteil ist, dass durch die Abstandseinstellung zwischen den Förderbahnen eine zuverlässige Abstützung der Ladeeinheiten auf deren Bewegung bis an die Beladeposition auf dem Ladestapel erreicht wird. Sind lange Ladeeinheiten zu stapeln, werden die Förderbahnen soweit auseinander gefahren, dass eine Ladeeinheit zuverlässig an den Förderbahnen auflastet und nicht zwischen diesen hindurch rutscht. Sind hingegen schmale Ladeeinheiten zu stapeln, werden die Förderbahnen unter Freilassung eines Sicherheitsabstandes aufeinander zugestellt, sodass eine nahezu vollflächige Förderebene für eine Ladeeinheit entsteht. Der Abstand kann aber ebenso gut auch unter Berücksichtigung anderer Kriterien, insbesondere einer Fördereigenschaft der Ladeeinheit eingestellt werden. Mit anderen Worten kann die Abstandseinstellung auch in Abhängigkeit der Formstabilität (biegeschlaffe oder formstabile Ladeeinheit) oder Oberflächenbeschaffenheit der Ladeeinheiten festgelegt werden.

Insbesondere ist es bei der manuellen Beladung auch möglich, dass einerseits die Ladeeinheiten auf zuverlässige Weise bis zu einem Kommissionierplatz gefördert werden und andererseits der Kommissionierperson eine komfortable Entnahme der Ladeeinheit von der Positionierfördereinrichtung ermöglicht wird. Die Entnahme durch die Kommissionierperson kann insbesondere dadurch erleichtert werden, dass die Ladeeinheit in ausreichendem Maße an den Förderbahnen seitlich vorsteht und mit den Händen von unten besonders gut ergriffen werden kann. Der Bedienperson werden damit ergonomisch günstige Bedingungen geschaffen.

Zudem kann bei der automatisierten Beladung die Positionierfördereinrichtung auch Stapellücken zwischen Ladeeinheiten oder einer Ladeeinheit und einem Wandteil der Ladehilfe bedienen und diese mit einer passenden Ladeeinheit auffüllen. Damit kann gegenüber solchen aus dem Stand der Technik bekannten Beladungsprinzipien eine noch höhere Beladungsdichte im Ladestapel erreicht werden.

Gemäß der Erfindung ist es vorgesehen, dass die Vorrichtung ferner eine ortsfeste Zuführeinrichtung für die Ladeeinheiten, eine dieser in Förderrichtung der Ladeeinheiten nachgeordnete und in einer Richtung (x-Richtung) horizontal längs des Ladungsträgers verstellbare Beschickungsfördereinrichtung zur Förderung der Ladeeinheiten auf die Förderbahnen sowie durch eine Verstellvorrichtung in einer Richtung (x-Richtung) horizontal längs des Ladungsträgers und relativ zur Beschickungsfördereinrichtung verstellbare Zuteilfördereinrichtung für die Ladeeinheiten aufweist, welche in Förderrichtung der Ladeeinheiten zwischen der Zuführeinrichtung und der Beschickungsfördereinrichtung angeordnet ist.

Die Zuteilfördereinrichtung verbindet die ortsfeste Zuführeinrichtung und die in x-Richtung verstellbare Beschikkungsfördereinrichtung, wodurch gleichzeitig mehrere Beladezyklen abgearbeitet werden können. So kann eine erste Ladeeinheit von der Beschickungsfördereinrichtung zur Positionierfördereinrichtung gefördert und von letzterer auf den Ladungsträger umgeladen werden, während in der Zwischenzeit von der Zuteilfördereinrichtung bereits eine zweite Ladeeinheit an einer Übergabeposition bereitgestellt wird. Die Zuteilfördereinrichtung kann gegenüber der Beschickungs- und Positionierfördereinrichtung in x-Richtung mit höherer Geschwindigkeit verfahren. Denn sollten geringfügige Relativverlagerungen der Ladeeinheit auf der Zuteilfördereinrichtung auftreten, kann die Ladeeinheit durch einen anschließenden Ausrichtvorgang wieder ausgerichtet/positioniert und mit hoher Positioniergenauigkeit von der Beschickungsfördereinrichtung auf die Positionierfördereinrichtung übergeben werden. Dadurch kann die Leistungsfähigkeit der Vorrichtung verbessert werden.

Von Vorteil ist auch die Ausgestaltung nach Anspruch 2, da die Bewegungen der Positionierfördereinrichtung und der Beschickungsfördereinrichtung entkoppelt ausgeführt werden können und noch während die Positionierfördereinrichtung eine Ladeeinheit an die Beladeposition bewegt, bereits die nächste Ladeeinheit in x-Richtung an die für sie im Ladestapel vorgesehene x-Position bewegt werden kann.

Gemäß der Ausbildung nach Anspruch 3 können die Förderbahnen in Tiefenrichtung des Ladungsträgers synchron ausfahren, um eine Ladeeinheit an die für sie vorgesehene z-Position zu transportieren.

Vorteilhaft ist auch die Weiterbildung nach Anspruch 4, wodurch die Ladeeinheiten gegebenenfalls ausgerichtet und in exakter Lage an die Positionierfördereinrichtung abgegeben werden können.

Die Ausrichtvorrichtung weist Seitenführungen auf, welche entweder exakt auf die Breite der zu stapelnden Ladeeinheit oder im Wesentlichen auf die Breite der zu stapelnden Ladeeinheit verstellt werden können. Werden die Seitenführungen exakt auf die Breite der Ladeeinheit verstellt, können durch deren Manipulation hervorgerufene Verformungen, insbesondere Ausbauchungen an jenen den Seitenführungen zugewandten Seitenwänden auf dem Transportweg entlang der Beschickungsfördereinrichtung beseitigt bzw. reduziert werden. Sind Seitenführungen durch Fördervorrichtungen gebildet und werden diese auf die Breite der Ladeeinheit verstellt, kann die Ladeeinheit mittels der Fördervorrichtungen reibschlüssig gefördert werden. Durch diese Maßnahme wird die Reibkraft auf die Ladeeinheit erhöht und dadurch eine zuverlässige Beförderung entlang der Beschickungsfördereinrichtung erreicht und eine gegebenenfalls verdrehte Ladeeinheit exakt parallel zu einer Belade- bzw. Förderrichtung ausgerichtet. Im Gegensatz dazu, können bei biegeschlaffen Ladeeinheiten die Seitenführungen auf einen Abstand eingestellt, welcher im Wesentlichen der um die Durchbiegung verringerten Breite entspricht.

Gemäß der Ausführung nach Anspruch 5 kann eine Ladeeinheit ohne zusätzliche Mechanismen von der Beschickungsfördereinrichtung auf die an dieser in z-Richtung vorragende Positionierfördereinrichtung bewegt werden.

Eine vorteilhafte Ausgestaltung der Erfindung ist auch im Anspruch 6 beschrieben. Bevorzugt schneiden sich die Förderebenen der Beschickungsfördereinrichtung und der Positionierfördereinrichtung und schließen einen Winkel kleiner 180° ein, wobei ein Winkel zwischen einer Horizontalen und der Förderebene der Positionierfördereinrichtung kleiner ist als ein Winkel zwischen einer Horizontalen und der Förderebene der Beschickungsfördereinrichtung. Dadurch kann eine Ladeeinheit unabhängig von deren Schwerpunktslage im Wesentlichen ruckfrei von der Beschickungsfördereinrichtung auf die Positionierfördereinrichtung übergeben werden. Durch die geneigte Förderebene über einen Längsabschnitt der Positionierfördereinrichtung wird ein kontrolliertes Absetzen einer Ladeeinheit auf dem Ladungsträger oder einer bereits vorhandenen Stapellage erreicht.

Mit der leicht abfallenden Förderebene, wie im Anspruch 7 beschrieben, wird eine kontrollierte Schwerpunktsverschiebung von Ladeeinheiten erreicht, die einen Artikel mit instabiler Schwerpunktslage, wie eine Flüssigkeit, Pulver und dgl., enthalten, und damit eine Übergabe der Ladeeinheiten von der Beschickungsfördereinrichtung auf die Positionierfördereinrichtung ohne wesentlicher, trägheitsbedingter Verlagerungen selbst bei hohen Übergabegeschwindigkeiten sichergestellt.

Nach einer Ausführung gemäß Anspruch 8 ist nun auch eine manuelle Beladung eines Ladungsträgers durch eine Kommissionierperson möglich.

Gemäß Anspruch 9 wird eine Fördereigenschaft der Ladeeinheiten durch eine elektronische Erfassungseinrichtung erfasst, beispielsweise an einem Lagerverwaltungsrechner durch Eingabe von Kommissionieraufträgen oder über eine geeignete Sensorik, welche beispielsweise im Bereich der Zuführeinrichtung angeordnet ist und die Dimension, Geometrie, Formstabilität, Oberflächenbeschaffenheit und/oder ein Längen/Breiten/Höhenverhältnis, bevorzugt berührungslos mit opto-elektronisch oder akustisch wirkender Sensorik, wie Laser-, Infrarot-oder Ultraschallsensoren erfasst.

Mit der Maßnahme nach Anspruch 12 werden eine besonders sanfte Übergabe einer Ladeeinheit auf eine Ladeebene des Ladungsträgers oder einer Stapellage und ein schonender Betrieb der Positionierfördereinrichtung ermöglicht.

Von Vorteil ist auch die Maßnahme nach Anspruch 13, da im Gegensatz zu der aus dem Stand der Technik bekannten Beladung von Ladungsträgern nunmehr auch Lücken zwischen bereits am Ladungsträger vorhandenen Ladeeinheiten oder zwischen einer Ladeeinheit und einem Wandteil einer Ladehilfe innerhalb einer Stapellage mit einer oder mehreren Ladeeinheiten aufgefüllt werden kann und damit eine optimale Volumensausnutzung und Stabilität im Ladestapel erreicht wird. Nachdem die seitliche Andruckkraft der Förderbahn auf die Seitenwand der bereits am Ladungsträger vorhandenen Ladeeinheiten niedrig ist, kann die zu stapelnde Ladeeinheit, die in z-Position bereits in der Lücke positioniert ist, alleinig aufgrund der Schwerkraft zwischen den Seitenwänden der Ladeeinheiten oder der Seitenwand einer Ladeeinheit und einem Wandteil nach unten gleiten, währenddem die Förderbahnen in z-Richtung zurückgefahren werden. Die Förderbahn wird in der unteren Hälfte der Ladeeinheit an die Seitenwand angelegt, sodass die Seitenwand der noch zu stapelnden Ladeeinheit und die Seitenwand der bereits am Ladungsträger vorhandenen Ladeeinheit ausreichend überlappen und beim Abgleiten der Ladeeinheit die Seitenwände nicht verkanten. Außerdem wird durch den Reibkontakt zwischen den Seitenwänden der abzugebenden Ladeeinheit und der bereits vorhandenen Ladeeinheit letztere zurückgehalten und der Ladestapel stabilisiert, währenddem die Förderbahnen in z-Richtung zurückfahren.

Mittels der Zuteilfördereinrichtung gemäß Anspruch 14 können gleichzeitig mehrere Beladezyklen abgearbeitet werden können. So kann eine erste Ladeeinheit von der Beschickungsfördereinrichtung zur Positionierfördereinrichtung gefördert und von letzterer auf den Ladungsträger umgeladen werden, während in der Zwischenzeit von der Zuteilfördereinrichtung bereits eine zweite Ladeeinheit an einer Übergabeposition bereitgestellt wird.

Gemäß Anspruch 15 wird die Ladeeinheit von der Zuteilfördereinrichtung in einer Position bereitgestellt, die bereits der durch das Rechnersystem festgelegten Beladeposition der "aktuellen" Ladeeinheit im Ladestapel in x-Richtung entspricht.

Die Maßnahme nach Anspruch 16 ist von Vorteil, da noch während des vorangegangenen Beladezyklus einer Ladeeinheit, insbesondere während der Ein- und Ausfahrbewegung der Positionierfördereinrichtung in z-Richtung, eine Ladeeinheit des nächsten Beladezyklus auf der Beschickungsfördereinrichtung aufgenommen werden kann.

Zum besseren Verständnis der Erfindung wird diese anhand der nachfolgenden Figuren näher erläutert.

Es zeigen:
- Fig. 1: einen Ausschnitt aus einem Kommissioniersystem mit einer Vorrichtung zur automatisierten Beladung eines Ladungsträgers, in perspektivischer und vereinfachter Darstellung;
- Fig. 2: die Vorrichtung zur automatisierten Beladung des Ladungsträgers nach Fig. 1, in perspektivischer Ansicht;
- Fig. 3: eine Seitenansicht auf die Vorrichtung zur Beladung eines Ladungsträgers gemäß den Linien III - III in Fig. 2, mit einer Zuführeinrichtung, Beschickungsfördereinrichtung, Ausrichtvorrichtung und Positionierfördereinrichtung in ihrer Übernahmestellung;
- Fig. 4: eine Seitenansicht auf die Vorrichtung nach Fig. 3 mit der Positionierfördereinrichtung in ihrer Beladestellung;
- Fig. 5 und 6: eine Seitenansicht auf die Vorrichtung nach Fig. 3 mit der aus ihrer Beladestellung in die Übernahmestellung zurückfahrenden Positionierfördereinrichtung;
- Fig. 7 und 8: eine Vorderansicht der Vorrichtung nach Fig. 2 mit auf unterschiedlich breite Ladeeinheiten verstellten Förderbahnen und Seitenführungen einer Ausrichtvorrichtung;
- Fig. 9 bis 12: eine Draufsicht auf einen Ladungsträger mit auf ihm gestapelten Ladeeinheiten und eine Ladehilfe mit unterschiedlichen Beladungsmustern sowie in die Lücke zwischen den Ladeeinheiten bzw. einer Ladeeinheit und einem Wandteil der Ladehilfe eingefahrenen Förderbahnen, in schematischer Darstellung;
- Fig. 13: ein Kommissioniersystem mit der Vorrichtung nach Fig. 1 für einen manuellen Beladevorgang des Ladungsträgers durch eine Kommissionierperson, in perspektivischer Ansicht und vereinfachter Darstellung;
- Fig. 14a-j: ein Kommissioniersystem mit einer anderen Ausführung der Vorrichtung und eine Sequenzdarstellung der Beladezyklen, in Draufsicht und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

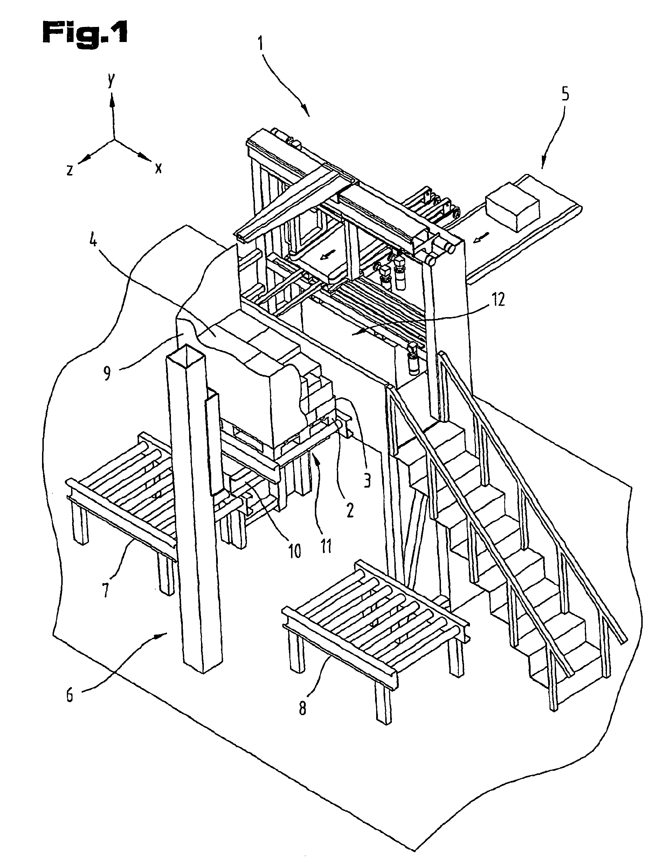

In der Fig. 1 ist ein Kommissioniersystem in perspektivischer Ansicht gezeigt, welches eine Vorrichtung 1 zum Beladen eines Ladungsträgers 2 mit einen Ladestapel 3 bildenden Ladeeinheiten 4, eine Zuführeinrichtung 5, eine Hubstation 6 zum Anheben und Absenken eines Ladungsträgers 2 und eine Fördertechnik 7, 8 zum Antransport leerer Ladungsträger 2 und Abtransport von beladenen Ladungsträgern 2 sowie eine Ladehilfe 9 aufweist. Die Fördertechnik 7, 8 ist durch einen Rollenförderer, Bandförderer und dgl. gebildet. Die Hubstation 6 ist mit einer auf einem heb- und senkbaren Hubtisch 10 angeordneten Ladungsträger-Wechseleinrichtung 11 versehen, die nach diesem Ausführungsbeispiel durch einen antreibbaren Rollenförderer gebildet ist. In abgesenkter Wechselposition der Ladungsträger-Wechseleinrichtung 11 kann ein beladener Ladungsträger 2 an die Fördertechnik 7 abgegeben oder aber ein leerer Ladungsträger 2 von der Fördertechnik 8 empfangen werden.

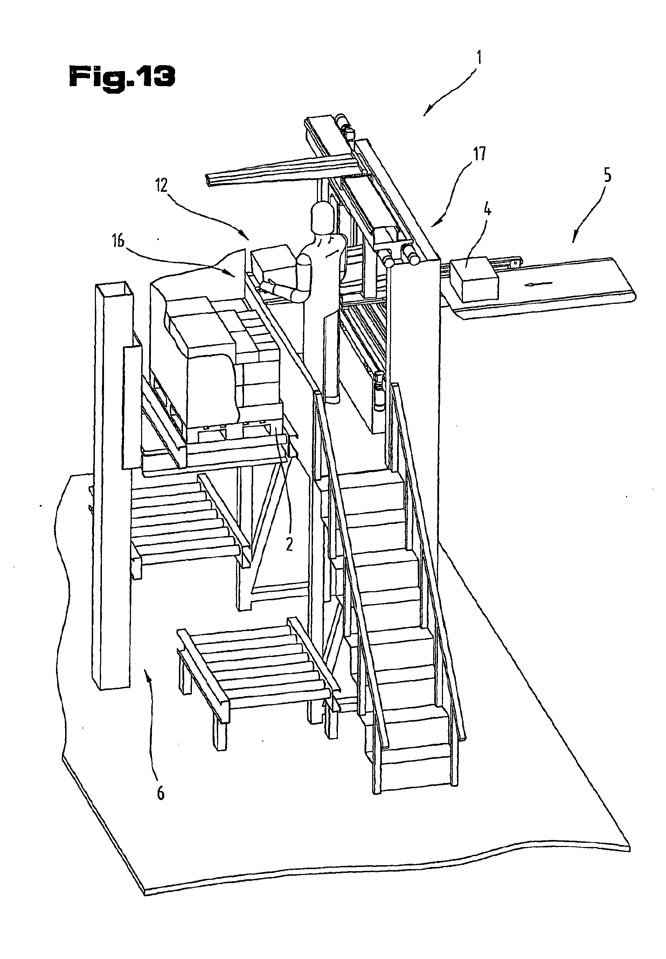

Das Kommissioniersystem weist nach dieser Ausführung auch einen in der Fig. 13 näher beschriebenen Kommissionierplatz 12 auf.

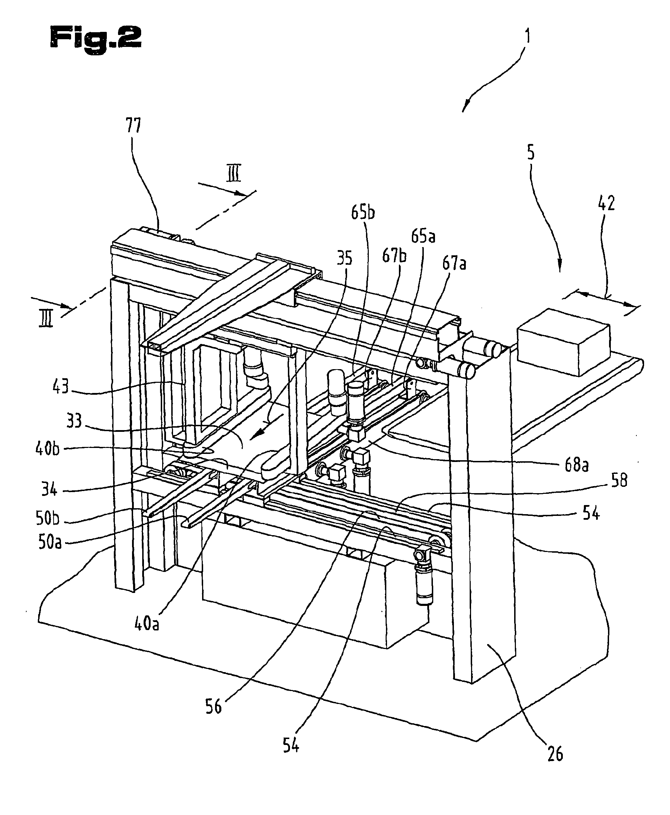

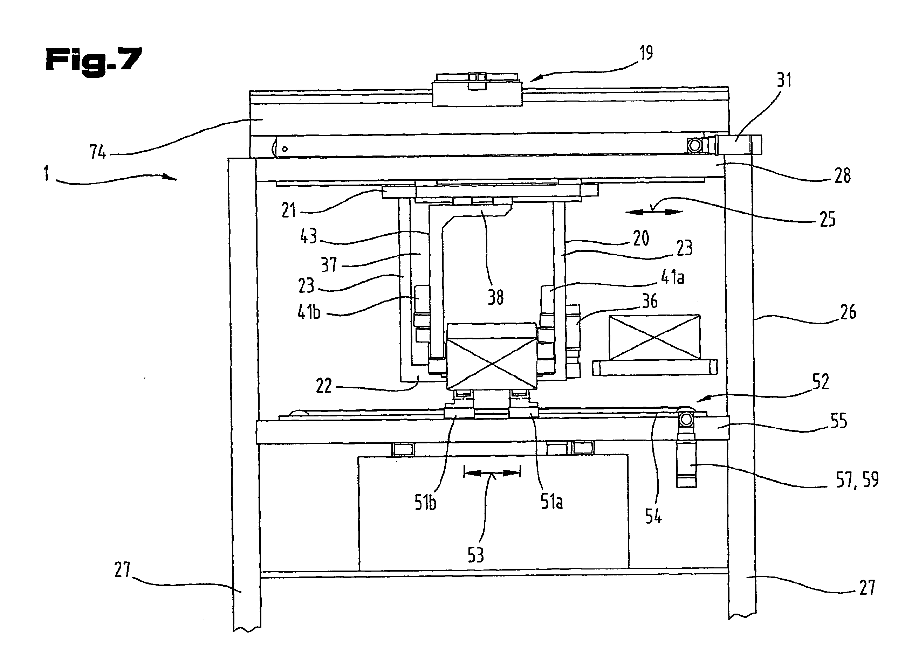

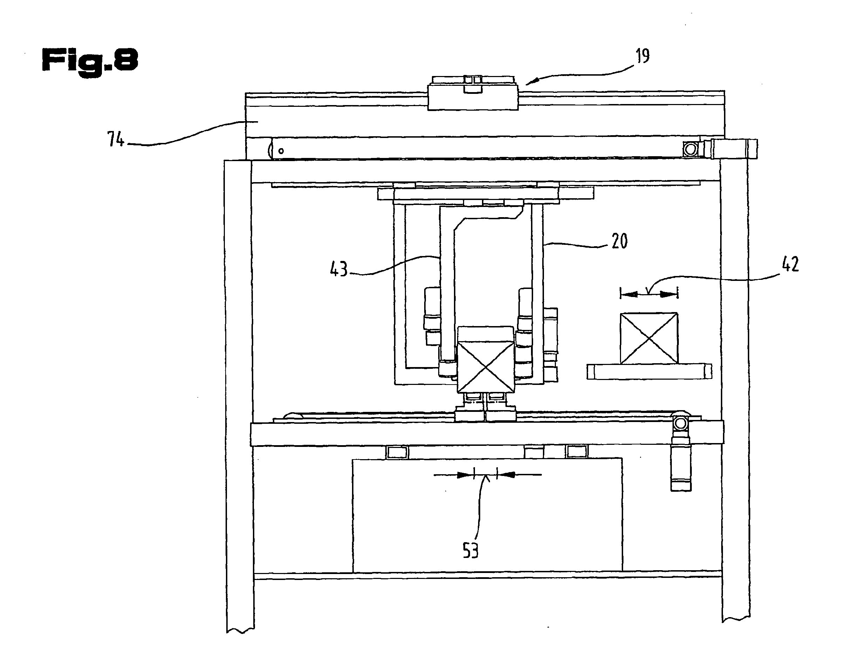

In den Fig. 2 bis 8 ist die Vorrichtung 1 zum automatisierten Beladen des Ladungsträgers 2 (Fig. 1), insbesondere einer Auftragspalette, mit den für einen Kommissionierauftrag benötigten Ladeeinheiten 4 in unterschiedlichen Ansichten gezeigt. Die Vorrichtung 1 weist eine Positionierfördereinrichtung 16, eine Beschickungsfördereinrichtung 17, eine Ausrichtvorrichtung 18 sowie eine Beladungsüberwachungseinrichtung 19 auf.

Die Beschickungsfördereinrichtung 17 ist auf einem Stellwagen 20 gelagert, der einen Tragrahmen aufweist. Der Tragrahmen umfasst einen oberen Träger 21 und unteren Träger 22 sowie sich zwischen diesen mit Abstand parallel erstreckende Tragarme 23. Der Stellwagen 20 ist über eine Verstellvorrichtung 24 entlang einer Führungsanordnung in x-Richtung 25 horizontal längs des Ladungsträgers 2 (Fig. 1) verstellbar auf einem Grundrahmen 26 der Vorrichtung 1 gelagert. Der Grundrahmen 26 weist Steher 27 und diese verbindende Querträger 28 auf. Die Führungsanordnung ist zwischen den Querträgern 28 und dem oberen Träger 21 des Stellwagens 20 angeordnet und durch Linearführungen 29 gebildet.

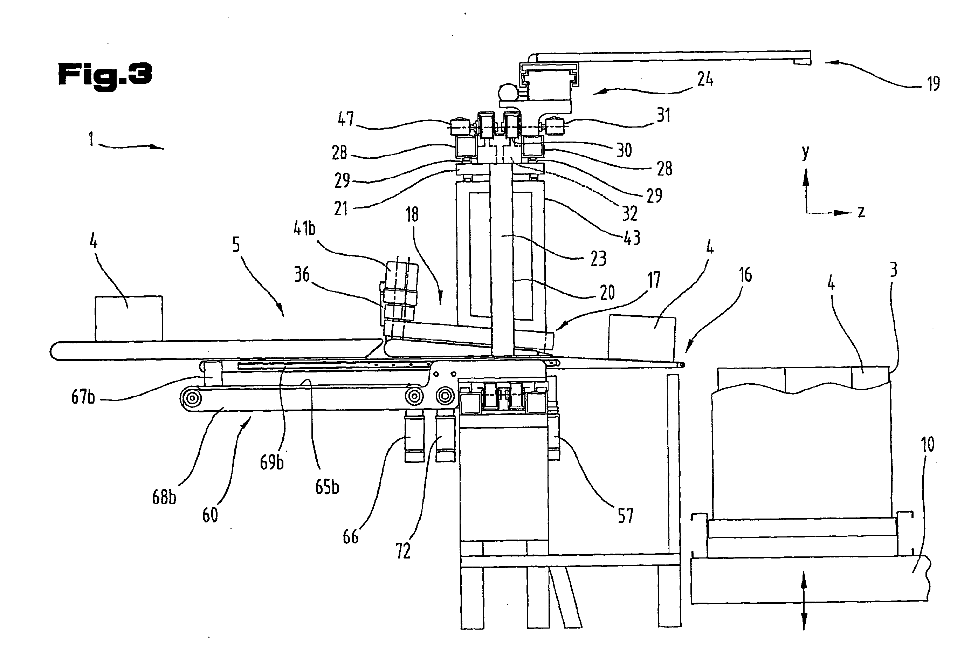

Die in Fig. 3 schematisch, dargestellte Verstellvorrichtung 24 ist durch einen Linearantrieb gebildet und weist nach gezeigtem Ausführungsbeispiel einen Zugmitteltrieb auf. Der Zugmitteltrieb umfasst ein endlos umlaufendes Zugmittel 30, welches um ein Umlenkrad und ein mit einem Stellmotor 31 gekuppeltes Antriebsrad geführt ist. Das Zugmittel 30 ist beispielsweise durch einen Zahnriemen, eine Kette oder dgl. gebildet. Am Zugmittel 30 ist ein Mitnahmeschlitten 32 befestigt, welcher mit dem Tragrahmen des Stellwagens 20 gekoppelt ist. Durch Drehbewegung des Antriebsrades im Uhrzeigersinn oder im Gegenuhrzeigersinn wird der Stellwagen 20 und die auf diesem gelagerte Beschickungsfördereinrichtung 17 horizontal längs und relativ zum Ladungsträger 2 in x-Richtung bis zu einer von einem Rechnersystem (Lagerverwaltungsrechner) festgelegten x-Position im Ladestapel 3 bewegt.

Die Beschickungsfördereinrichtung 17 umfasst eine Linearfördereinrichtung, insbesondere einen von einem Fördermotor 36 angetriebenen Bandförderer 33, Gurtförderer und dgl. und eine am vorderen Ende parallel zu dessen Stirnkante mit geringem Abstand angeordnete Gleitleiste 34. Der Bandförderer 33 bildet eine in Förderrichtung 35 der Ladeeinheiten 4 zu deren vorderen Ende geneigt nach unten verlaufende Förderebene aus. Die Gleitleiste 34 weist eine in Förderrichtung 35 der Ladeeinheiten 4 zu ihrem vorderen Ende geneigt nach unten verlaufende Übergabeebene aus, wobei die Förderebene des Bandförderers 33 und die Übergabeebene der Gleitleiste 35 einen Winkel größer 180° einschließen.

Die Ausrichtvorrichtung 18 weist relativ zueinander verstellbare Seitenführungen auf, die nach diesem gezeigten Ausführungsbeispiel durch in Förderrichtung 35 der Ladeeinheiten 4 mit Abstand parallel zueinander angeordnete Fördervorrichtungen 40a, 40b, insbesondere Bandförderer, Gurtförderer und dgl. gebildet sind. Jede Fördervorrichtung 40a, 40b, ist mit einem Antriebsmotor 41a, 41b gekoppelt. Die Umlaufgeschwindigkeit der Fördervorrichtungen 40a, 40b entspricht annähernd der Umlaufgeschwindigkeit des Bandförderers 33.

Wie im nachfolgenden noch genauer beschrieben wird, sind innerhalb des Kommissioniersystems üblicherweise verschiedenste Ladeeinheiten 4 unterschiedlichster Dimensionen, Geometrien, Formstabilität, Oberflächenbeschaffenheit und/oder Längen/Breiten/Höhenverhältnisse zu kommissionieren. Weist ein Kommissionierauftrag Ladeeinheiten 4 unterschiedlicher Breiten 42 (Dimensionen) auf, werden die Fördervorrichtungen 40a, 40b entsprechend verstellt.

Es sei an dieser Stelle darauf hingewiesen, dass bei biegeschlaffen Ladeeinheiten 4 die Breite als um die Durchbiegung verringerte Breite 42 zu verstehen ist.

Nach gezeigtem Ausführungsbeispiel ist die rechte Fördervorrichtung 40a ortsfest am Tragrahmen des Stellwagens 20 angeordnet, während die linke Fördervorrichtung 40b in x-Richtung relativ zur Positionierfördereinrichtung 17 verstellbar ist. Die linke Fördervorrichtung 40b ist auf einem Stellwagen 43 angeordnet, der einen Tragrahmen aufweist. Der Tragrahmen umfasst einen Rahmen 37 und Kragarme 38. Der Stellwagen 43 ist über eine Verstellvorrichtung 44 entlang einer Führungsanordnung in x-Richtung 25 verstellbar auf dem Stellwagen 20 der Positionierfördereinrichtung 17 gelagert. Die Führungsanordnung ist durch Linearführungen 45 gebildet, die zwischen dem oberen Träger 21 des Stellwagens 20 und den Kragarmen 38 des Stellwagens 43 angeordnet sind.

Die Verstellvorrichtung 44 ist durch einen Linearantrieb gebildet und weist nach gezeigtem Ausführungsbeispiel einen Zugmitteltrieb auf. Der Zugmitteltrieb umfasst ein endlos umlaufendes Zugmittel 46, welches um ein Umlenkrad und ein mit einem Stellmotor 47 gekuppeltes Antriebsrad geführt ist. Das Zugmittel 46 ist beispielsweise durch einen Zahnriemen, eine Kette oder dgl. gebildet. Am Zugmittel 46 ist ein Mitnahmeschlitten 48 befestigt, welcher mit dem Tragrahmen des Stellwagens 43 gekoppelt ist. Die Drehrichtung des Stellmotors 47 ist reversibel ausgebildet, sodass der Stellwagen 43 und damit die Fördervorrichtung 40b in x-Richtung entweder auf die gegenüberliegende Fördervorrichtung 40a zu bewegt oder von dieser weg bewegt wird. Durch die Verstellung des Abstandes zwischen den Fördervorrichtungen 40a, 40b findet eine Anpassung an unterschiedliche Breiten 42 der Ladehilfsmittel 4 statt. Dadurch, dass vorzugsweise nur eine der Fördervorrichtungen 40a, 40b verstellt wird, vereinfacht sich der Aufbau der Verstellvorrichtung 44 und werden unterschiedlich breite Ladeeinheiten 4 stets gegen ein und dieselbe Referenzlinie an der ortsfesten Fördervorrichtung 40a positioniert.

Andererseits ist es aber auch möglich, dass auch die rechte Fördervorrichtung 40a über die Verstellvorrichtung relativ zur Positionierfördereinrichtung 17 in x-Richtung verstellbar ist und beide Fördervorrichtungen 40a, 40b synchron aufeinander zugestellt oder voneinander wegbewegt werden können. Dies hat den Vorteil, dass unterschiedlich breite Ladeeinheiten 4 zentrisch auf der Beschickungsfördereinrichtung 17 positioniert werden.

Die Positionierfördereinrichtung 16 weist parallele Förderbahnen 50a, 50b auf, die jeweils auf einem Führungsschlitten 51a, 51b angeordnet und über eine erste Verstellvorrichtung 52 entlang einer Führungsanordnung in eine Übernahmestellung in x-Richtung verstellbar auf dem Grundrahmen 26 der Vorrichtung 1 gelagert sind. In der Übernahmestellung sind die Förderbahnen 50a, 50b auf einen aus der Fördereigenschaft der zu stapelnden Ladeeinheit 4 vom Rechnersystem ermittelten Abstand 53 eingestellt und so unterhalb der Beschickungsfördereinrichtung 17 positioniert, dass eine auf der Beschickungsfördereinrichtung 17 liegende Ladeeinheit 4 relativ zu den Förderbahnen 50a, 50b mittig übergeben werden kann.

Wie oben beschrieben, werden durch den variierbaren Abstand 53 zwischen den Förderbahnen 50a, 50b die Auflagepunkte für die Ladeeinheit 4 optimal eingestellt. Es hat sich insbesondere bei biegeschlaffen Ladeeinheiten 4 gezeigt, dass wenn die Ladeeinheit 4 an den Förderbahnen 50a, 50b jeweils mit einem seitlichen Überstand von etwa 15% bis 25% der Breite 42 aufliegt, sich am Abschnitt der Ladeeinheit 4 zwischen den Förderbahnen 50a, 50b und an den überstehenden Abschnitten der Ladeeinheit 4 eine annähernd gleiche Durchbiegung der Ladeeinheit 4 ergibt.

Die Führungsanordnung ist durch Linearführungen 54 gebildet, die zwischen den Führungsschlitten 51a, 51b und Querträgern 55 des Grundrahmens 26 angeordnet ist.

Die Verstellvorrichtung 52 ist durch einen Linearantrieb gebildet und weist nach gezeigtem Ausführungsbeispiel einen ersten und zweiten Zugmitteltrieb auf Der erste Zugmitteltrieb umfasst ein endlos umlaufendes Zugmittel 56, welches um ein Umlenkrad und ein mit einem Stellmotor 57 gekuppeltes Antriebsrad geführt ist. Das Zugmittel 56 ist beispielsweise durch einen Zahnriemen, eine Kette oder dgl. gebildet und mit dem die Förderbahn 50a lagernden Führungsschlitten 51a fest verbunden ist. Der zweite Zugmitteltrieb umfasst ein endlos umlaufendes Zugmittel 58, welches um ein Umlenkrad und ein mit einem Stellmotor 59 gekuppeltes Antriebsrad geführt ist. Das Zugmittel 58 ist beispielsweise durch einen Zahnriemen, eine Kette oder dgl. gebildet und mit dem die Förderbahn 50b lagernden Führungsschlitten 51 b fest verbunden ist. Durch Drehen der Antriebsräder im Uhrzeigersinn oder im Gegenuhrzeigersinn, werden die Förderbahnen 50a, 50b in x-Richtung bis in ihre Übernahmestellung bewegt.

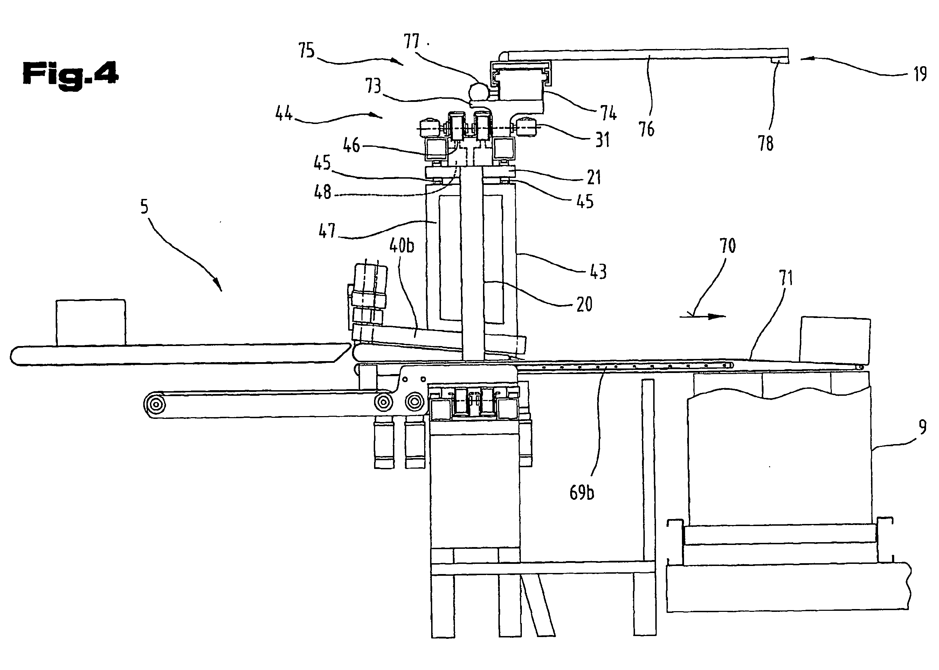

Die Förderbahnen 50a, 50b sind über eine zweite Verstellvorrichtung 60 auch in z-Richtung (Tiefenrichtung des Ladungsträgers 2) zwischen einer in Fig. 3 dargestellten, eingefahrenen Übernahmestellung und einer in Fig. 4 dargestellten, ausgefahrenen Beladestellung annähernd synchron verstellbar. Die Förderbahnen 50a, 50b ragen in ihrer Übernahmestellung in z-Richtung am vorderen Ende der Beschickungsfördereinrichtung 17 vor. In der Beladestellung sind die Förderbahnen 50a, 50b derart positioniert, dass eine Ladeeinheit 4 an eine für sie vom Rechnersystem festgelegte x- und z-Position im Ladestapel 3 bewegt ist.

Die Ausfahrbewegung der Förderbahnen 50a, 50b wird durch die Verstellvorrichtung 60 ermöglicht, welche durch einen Linearantrieb gebildet und nach gezeigtem Ausführungsbeispiel einen ersten und zweiten Zugmitteltrieb aufweist. Die Zugmitteltriebe umfassen jeweils ein endlos umlaufendes Zugmittel 65a, 65b, welches um ein Umlenkrad und ein Antriebsrad geführt ist. Die Antriebsräder sind über eine nicht weiters dargestellte Antriebswelle an einen gemeinsamen Verschiebemotor 66 gekuppelt. Genauso gut kann aber jedes Antriebsrad an einen Verschiebemotor gekuppelt sein. Die Zugmittel 65a, 65b sind beispielsweise durch einen Zahnriemen, eine Kette oder dgl. gebildet, an welchem ein Koppelungsschlitten 67a, 67b befestigt ist. Die Zugmitteltriebe sind jeweils auf einem Rahmengestell 68a, 68b gelagert, wovon das rechte Rahmengestell 68a mit dem die Förderbahn 50a lagernden Führungsschlitten 51a und das linke Rahmengestell 68b mit dem die Förderbahn 50b lagernden Führungsschlitten 51 b fest verbunden ist. Der Verschiebemotor 66 ist am Rahmengestell 68a befestigt.

Die Förderbahnen 50a, 50b sind jeweils über eine Führungsanordnung, insbesondere eine in den Fig. dargestellte Linearführung 69a, 69b am Führungsschlitten 51a, 51b gelagert und mit ihrem in Ausfahrrichtung 70 hinterem Ende mit dem Koppelungsschlitten 67a, 67b verbunden. Die Drehrichtung des Verschiebemotors 66 ist reversibel, sodass entsprechend der Drehrichtung die Förderbahnen 50a, 50b mit einer auf ihnen auflastenden Ladeeinheit 4 bis an die vorgesehene z-Position im Ladestapel 3 ausfahren (Fig. 4) und danach zur neuerlichen Aufnahme einer Ladeeinheit 4 in die Übernahmestellung einfahren kann (Fig. 3).

Wie aus den Figuren ersichtlich, weisen die Förderbahnen 50a, 50b jeweils eine Linearfördereinrichtung mit einem Fördermittel 71, insbesondere Fördergurt, Förderband und dgl. auf, die an einem gemeinsamen Fördermotor 72 gekoppelt sind. Der Fördermotor 72 ist am Rahmengestell 68a befestigt. Genauso gut kann aber jedes Fördermittel 71 von einem Fördermotor angetrieben werden.

In einer anderen nicht gezeigten Ausführung ist die rechte Förderbahn 50a am Stellwagen 20 der Beschikkungsfördereinrichtung 17 befestigt und ausschließlich die linke Förderbahn 50b in x-Richtung verstellbar. Nach dieser Ausführung weist die Verstellvorrichtung 52 nur noch den zweiten Zugmitteltrieb auf. Der erste Zugmitteltrieb kann entfallen, wodurch sich der Aufbau der Verstellvorrichtung 52 insgesamt vereinfacht.

Wie in den Fig. weiters eingetragen, ist am Querträger 28 des Grundrahmens 26 ein Tragprofil 73 befestigt. Auf dem Tragprofil 73 liegt ein Führungsprofil 74 auf, an dem ein über eine Verstellvorrichtung 75 in x-Richtung verschiebbar Haltearm 76 gelagert ist. Die Verstellvorrichtung 75 weist einen Stellmotor 77 und einen nicht weiters dargestellten Zugmitteltrieb auf, dessen Zugmittel mit dem Haltearm 76 verbunden ist. Am vorderen Ende des Haltearmes 76 ist die Beladungsüberwachungseinrichtung 19 zur Erfassung des Beladungszustandes, wie etwa die aktuelle Höhe des Ladestapels 3 und/oder ein Beladungsmuster in einer Stapellage angeordnet, die in Form einer opto-elektronischen oder akustischen Abtasteinrichtung 78, insbesondere eines Scanners gebildet ist.

Im nachfolgenden wird das Verfahren zur automatisierten Beladung des Ladungsträgers 2 mit der obigen Vorrichtung 1 beschrieben.

Sobald ein oder mehrere Kommissionieraufträge, Aufträge zur Zusammenstellung und Verladung einer Warenlieferung, beispielsweise für eine Einzelhandelsfiliale, an einer nicht dargestellten Erfassungseinrichtung, beispielsweise einem Lagerverwaltungsrechner, erfasst wurden, werden die für einen Kommissionierauftrag benötigten Ladeeinheiten 4 über eine nicht dargestellte automatisierte Fördertechnik, beispielsweise einem Regalfahrzeug aus einem Lager entnommen und der Vorrichtung 1 in der Verladungszone zugeführt. In der Verladungszone werden die Ladeeinheiten 4 über die Vorrichtung 1 auf die Ladungsträger 2, insbesondere Auftragspaletten, geladen, die fertigen Ladestapel 3 an einer Folienwickelmaschine (nicht dargestellt) zur Stabilisierung mit Sicherungsmitteln, wie einer Folie, Bändern oder dgl. umwickelt und schließlich auf einen LKW verladen.

Noch bevor die Ladeeinheiten 4 der Vorrichtung 1 zugeführt werden, wird ein Identifizierungscode der Ladeeinheiten 4 erfasst und vom Lagerverwaltungsrechner zu jeder Ladeeinheit 4 deren gespeicherte Fördereigenschaft ermittelt. Die Fördereigenschaften sind durch die Dimension, Geometrie, Formstabilität, Oberflächenbeschaffenheit und/oder ein Längen/Breiten/Höhenverhältnis und dgl. der Ladeeinheit 4 bestimmt. Aus diesen Daten werden vom Lagerverwaltungsrechner zusätzlich zu der oben beschriebenen Abstandseinstellung der Fördervorrichtungen 40a, 40b und Förderbahnen 50a, 50b die Beladepositionen für die Ladeeinheiten 4 im Ladestapel 3 ermittelt, daher für jede Ladeeinheit 4 eine x-Position, y-Position und z-Position im Ladestapel 3 festgelegt. Die Beladepositionen werden vom Lagerverwaltungsrechner unter Berücksichtigung verschiedenster Aspekte festgelegt. So sollte der fertig gestellte Ladestapel 3 möglichst stabil und einfach transportfähig sein, daher werden schwere Ladeeinheiten 4 unten im Ladestapel 3 und leichtere Ladeeinheiten 4 oben im Ladestapel 3 positioniert. Ebenso werden empfindlichere Ladeeinheiten 4 oben im Ladestapel 3 untergebracht. Auch sollte der Ladestapel 3 möglichst dicht gepackt und möglichst hoch sein. Sind nun die bezüglich der Stabilität und/oder Volumenausnutzung des Ladestapels 3 optimierten Beladepositionen für die Ladeeinheiten 4 berechnet, wird vom Lagerverwaltungsrechner eine Beladereihenfolge ermittelt. Die Ladeeinheiten 4 werden entsprechend dieser Reihenfolge von der Zuführeinrichtung 5 nacheinander vereinzelt zur Beschickungsfördereinrichtung 17 gefördert.

Nach einer anderen Ausführung werden die Beladepositionen (x-, y- und z-Positionen) für die Ladeeinheiten 4 im Ladestapel 3 anhand des von der Beladungsüberwachungseinrichtung 19 erfassten Beladungszustandes ermittelt und davon abhängig die Ladeeinheiten 4 in entsprechender Reihenfolge vereinzelt der Beschickungsfördereinrichtung 17 zugefördert.

Hernach wird die zu stapelnde Ladeeinheit 4 gegebenenfalls noch vor ihrer Übergabe auf die in z-Richtung am vorderen Ende der Beschickungsfördereinrichtung 17 vorragenden und in die Übernahmestellung bewegten Förderbahnen 50a, 50b zwischen den relativ zueinander verstellbaren Fördervorrichtungen 40a, 40b in zur Förderrichtung 35 der Ladeeinheiten 4 paralleler Richtung ausgerichtet. Dazu wird nach gezeigtem Ausführungsbeispiel die Fördervorrichtung 40b soweit auf die gegenüberliegende Fördervorrichtung 40a zugestellt, dass der Abstand zwischen den Fördervorrichtungen 40a, 40b geringfügig größer ist als die Breite 42 der Ladeeinheit 4 oder exakt der Breite 42 der Ladeeinheit 4 entspricht. Bei biegeschlaffen Ladeeinheiten 4 können die Fördervorrichtungen 40a, 40b auch auf einen Abstand eingestellt, welcher im Wesentlichen der um die Durchbiegung verringerten Breite 42 entspricht.

Ist eine vereinzelte Ladeeinheit 4 von der Beschickungsfördereinrichtung 17 übernommen worden, wird der Stellwagen 20 in x-Richtung soweit verfahren, dass sich die Ladeeinheit 4 an der vorgesehenen x-Position im Ladestapel 3 befindet.

Vor der Übergabe der Ladeeinheit 4 von der Beschickungsfördereinrichtung 17 auf die Positionierfördereinrichtung 16 werden die Förderbahnen 50a, 50b noch in die Übernahmestellung bewegt, in welcher der aus der Fördereigenschaft der zu übernehmenden Ladeeinheit 4 ermittelte Abstand 53 eingestellt ist und die Ladeeinheit 4 relativ zu den Förderbahnen 50a, 50b mittig übergeben werden kann. Danach wird die Ladeeinheit 4 von der Beschickungsfördereinrichtung 17 auf die Positionierfördereinrichtung 16 gefördert.

Nachdem die Ladeeinheit 4 von der Positionierfördereinrichtung 16 übernommen wurde, werden deren Förderbahnen 50a, 50b aus ihrer in Fig. 3 gezeigten Übernahmestellung relativ zur Beschickungsfördereinrichtung 17 in die in Fig. 4 gezeigte Beladestellung ausgefahren, in welcher sich die auf den Fördermitteln 71 aufliegende Ladeeinheit 4 oberhalb ihrer vorgesehenen x- und z-Position im Ladestapel 3 befindet. Während der Ausfahrbewegung der Förderbahnen 50a, 50b kann durch Antrieb der Fördermittel 71 die Ladeeinheit 4 auf der Positionierfördereinrichtung 16 positioniert werden, insbesondere bis an dessen vorderes Ende transportiert werden, wie dies vorzugsweise bei Ladeeinheiten 4 kleinerer Dimension zweckmäßig ist.

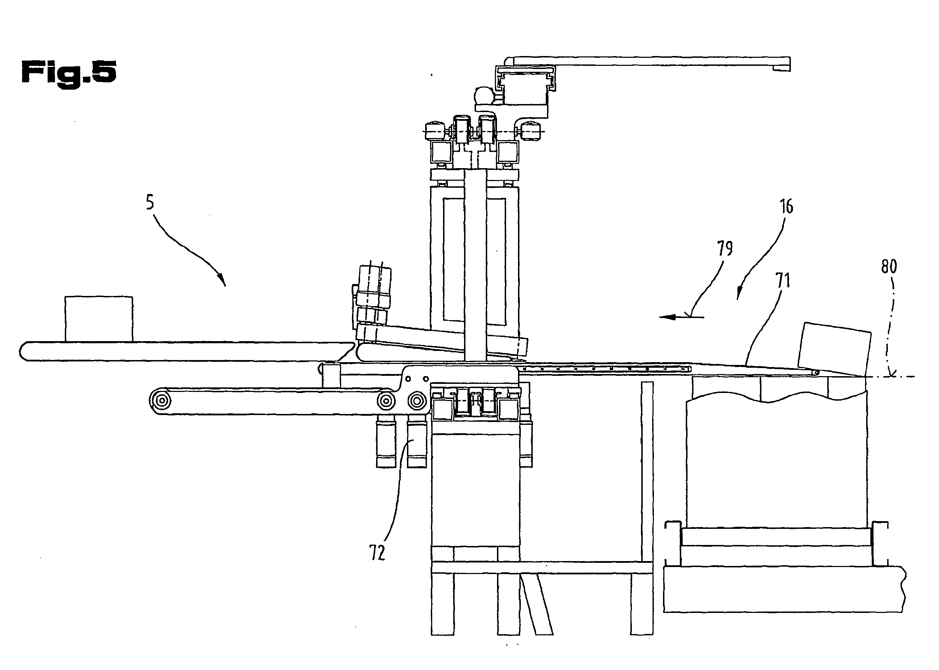

Danach werden die Förderbahnen 50a, 50b zusammen mit den Fördermitteln 71 in Rückfahrrichtung 79 zurückgebogen, wobei gleichzeitig die Fördermittel 71 auflageseitig über den Fördermotor 72 entgegen der Rückfahrrichtung 79 in Förderrichtung 35 der Ladeeinheiten 4 angetrieben wird. Die Fördergeschwindigkeit der Fördermittel 71 entspricht dabei betragsmäßig der Rückfahrgeschwindigkeit der Förderbahnen 50a, 50b, sodass die Fördermittel 71, insbesondere die Förderbänder unten an der Unterseite der Ladeeinheit 4 ohne Relativverschiebung zur Ladeeinheit 4 verstellt werden. Der Ladeeinheit 4 wird ihre Auflage auf den Fördermitteln 71 entzogen, sodass sie mit ihren in Rückfahrrichtung 79 hinterem Ende auf die tiefer gelegene Ladeebene 80 des Ladungsträgers 2 oder einer Stapellage kippt, wie in Fig. 5 dargestellt.

Die zu stapelnde Ladeeinheit 4 soll in z-Richtung möglichst dicht an einer bereits in der Stapellage vorhandenen Ladeeinheit 4 oder einem Wandteil der Ladehilfe 9 anliegen. Dies wird erreicht, wenn die Fördergeschwindigkeit der Fördermittel 71 geringfügig größer ist als die Rückfahrgeschwindigkeit der Förderbahnen 50a, 50b.

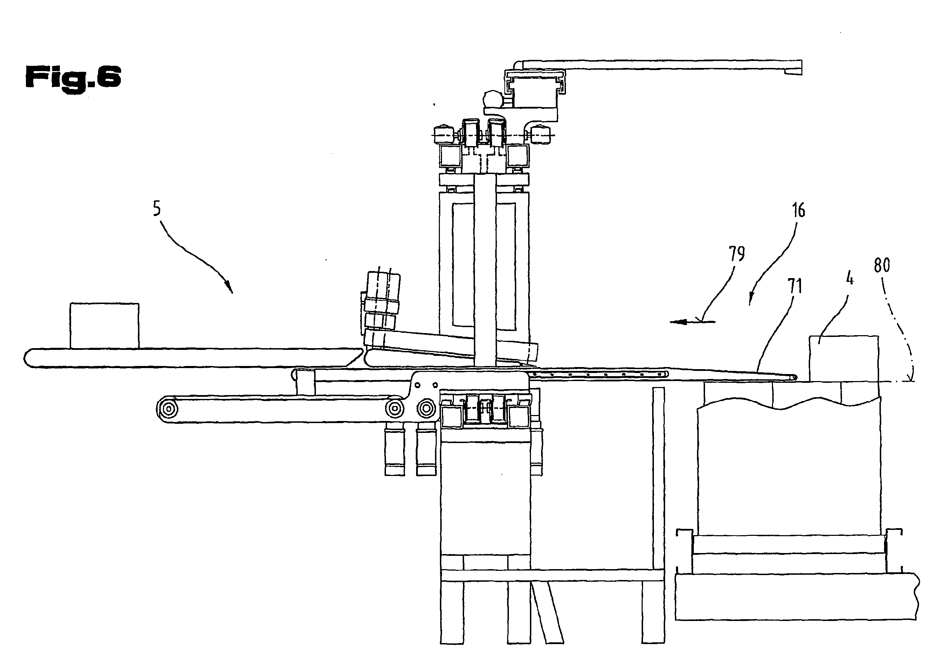

Der Beladevorgang ist beendet, wenn die Ladeeinheit 4 auf der Ladeebene 80 aufliegt und die Fördermittel 71 vollständig unter der Ladeeinheit 4 fortbewegt sind, wie in Fig. 6 dargestellt.

Sobald eine Lage im Ladestapel 3 fertig gestapelt ist, wird der Aufnahmetisch 10 in y-Richtung nach unten bewegt, worauf eine neuerliche Lage im Ladestapel 3 erstellt werden kann.

Wie in den Fig. 3 bis 6 eingetragen, ist eine Ladehilfe 9 vorgesehen, die den sich bildenden Ladestapel 3 von drei Seiten umgibt und so als Abstützfläche für eine Schiebebewegung der Ladeeinheit 4 in Horizontalrichtung dienen kann.

Von Vorteil ist auch, wenn die Bewegungen der Ladeeinheiten 4 auf der Zuführeinrichtung 5, Positionierfördereinrichtung 16 und der Beschickungsfördereinrichtung 17 entkoppelt sind. So wird noch währenddem die Positionierfördereinrichtung 16 eine Ladeeinheit 4 an die Beladeposition bewegt, die nächste Ladeeinheit 4 von der Beschikkungsfördereinrichtung 17 in die festgelegte x-Richtung und/oder währenddem die Beschickungsfördereinrichtung 17 eine Ladeeinheit 4 in die festgelegte x-Richtung bewegt, die nächste Ladeeinheit 4 an das vordere Ende der Zuführeinrichtung 5 bewegt. Dadurch kann die Durchsatzleistung an der Vorrichtung 1 erhöht werden.

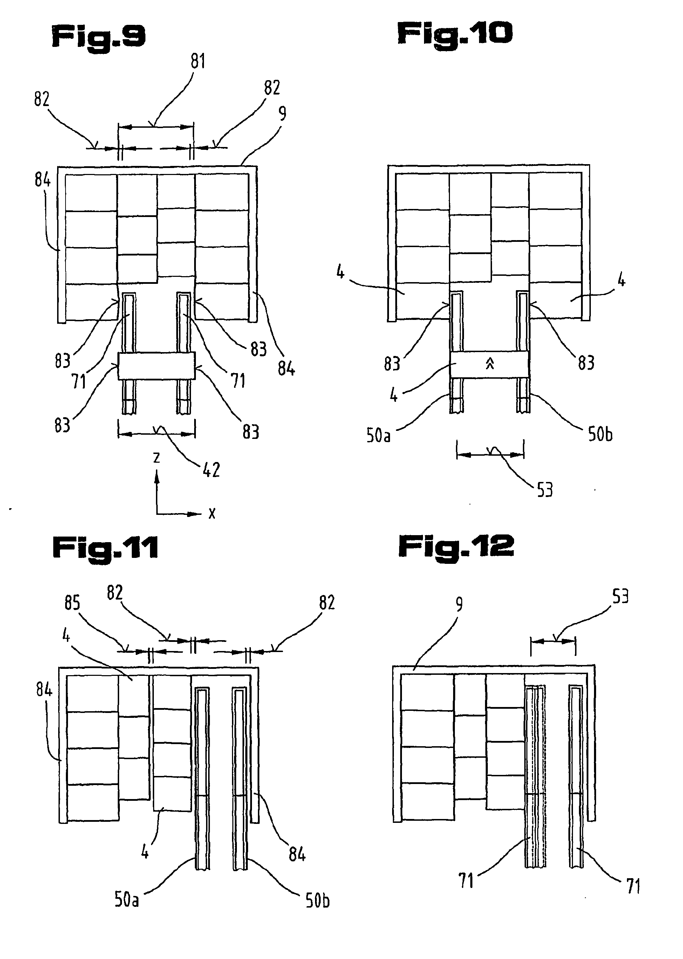

Wie in den Fig. 9 und 10 dargestellt, kann sich gezeigtes Beladungsmuster ergeben und eine Stapellücke zwischen Ladeeinheiten 4 innerhalb einer Stapellage entstehen. Eine Lückenweite 81 wird vom Rechnersystem bei der Bestimmung der Beladepositionen der Ladeeinheiten 4 berechnet oder von der Beladungsüberwachungsvorrichtung 19 erfasst. Die Lückenweite 81 wird vorzugsweise vor der Übergabe einer Ladeeinheiten 4 auf den Ladestapel 3, insbesondere an die Stapellücke in einer Stapellage, erfasst und vom Rechnersystem die Verstellvorrichtung 52 so angesteuert, dass die Förderbahnen 50a, 50b anhand der Lückenweite 81 relativ zueinander in x-Richtung bewegt und auf den unten beschriebenen Abstand 53 eingestellt werden. Nach dieser Ausführung werden die Förderbahnen 50a, 50b zur Abstandseinstellung vorzugsweise synchron und gegensinnig bewegt. Die Lückenweite 81 ist möglicherweise nur um einige Millimeter zu schmal als zur Aufnahme einer Ladeeinheit 4 mit der Breite 42 erforderlich wäre. Andererseits kann auch aus Sicherheit gegen Kollision ein Sicherheitsabstand 82 zwischen den Seitenwänden 83 der noch zu stapelnden Ladeeinheit 4 und der bereits in der Stapellage vorhandenen Ladeeinheit 4 oder seitlich zwischen den Förderbahnen 50a, 50b und den Seitenwänden 83 der bereits in der Stapellage vorhandenen Ladeeinheiten 4 erforderlich sein. Der Sicherheitsabstand 82 beruht auf der Tatsache, dass ein Kundenauftrag üblicherweise nicht nur Ladeeinheiten 4 mit besonders formstabilen Seitenwänden 83, sondern auch mit leicht verformbaren Seitenwänden 83 umfasst und dadurch Ausbauchungen entstehen oder sich eine Schiefstellung der Seitenwände 83 ergibt.

Um eine Ladeeinheit 4 in die Lücke zu stapeln, werden die Förderbahnen 50a, 50b in die in Fig. 9 eingetragene Beladestellung in z-Richtung zwischen die Ladeeinheiten 4 ausgefahren. Die Förderbahnen 50a, 50b sind in der Beladestellung in x-Richtung zumindest um den seitlichen Sicherheitsabstand 82 von den gegebenenfalls gewölbten Seitenwänden 83 entfernt. Dies wird durch die Verstellung einer oder beider Förderbahnen 50a, 50b in x-Richtung erreicht.

Danach werden die relativ zueinander verstellbaren Förderbahnen 50a, 50b in x-Richtung in eine in Fig. 10 gezeigte Spreizstellung auseinander bewegt und dabei die gegebenenfalls gewölbte Seitenwand 83 der gestapelten Ladeeinheit(en) 4 rückgeformt. In der Spreizstellung sind die Förderbahnen 50a, 50b in x-Richtung auf den Abstand 53 eingestellt. Der Abstand 53 wird eingestellt, ehe eine Ladeeinheit 4 von der Positionierfördereinrichtung 16 an die Stapellücke abgegeben wird. Nach der Ermittlung einer Lückenweite 81 und dem Vergleich mit der Breite 42 einer Ladeeinheit 4, wird vom Rechnersystem der maximale Abstand 53 (Spreizstellung) ermittelt, bei dem gegebenenfalls auch unter Berücksichtigung der oben genannten Fördereigenschaften dennoch eine zuverlässige Auflage der Ladeeinheit 4 auf den Förderbahnen 50a, 50b sichergestellt ist. Üblicherweise wird der x-Verstellweg der Förderbahnen 50a, 50b zwischen dem anhand der Fördereigenschaften eingestellten Abstand 53 und dem anhand der Lückenweite 81 eingestellten Abstand 53 nur einige Millimeter bis Zentimeter betragen, sodass einerseits eine zuverlässige Anförderung der Ladeeinheit 4 und andererseits eine hohe Beladungsdichte im Ladestapel 3 erreicht wird. Sollte eine sichere Anförderung der Ladeeinheit 4 nicht gewährleistet sein, da der maximale Abstand 53 zu groß ist, wird diese Ladeeinheit 4 gegebenenfalls nicht an der Stapellücke sondern an anderer freier Stelle im Ladestapel 3 abgeladen.

Anderenfalls kann die Lückenweite 81 zumindest auf die Breite 42 der zustapelnden Ladeeinheit 4 vergrößert werden, wonach die Ladeeinheit 4 ohne Kollision in die Lücke gefördert werden kann. Die Förderbahnen 50a, 50b verharren solange in ihrer Spreizstellung bis die Ladeeinheit 4 an die festgelegte z-Position gefördert wurde. Danach werden die Förderbahnen 50a, 50b wieder in ihre Beladestellung in x-Richtung aufeinander zu bewegt und in Richtung der Übernahmestellung (Fig. 3) zurückgefahren und dabei die Ladeeinheit 4 auf der Ladeebene 80 (nicht eingetragen) exakt an der z-Position abgelegt.

Natürlich kann auch ein Beladungsmuster entstehen, bei dem eine Lücke zwischen einem Wandteil 84 der Ladehilfe 9 und einer Ladeeinheit 4 innerhalb einer Stapellage entsteht. In diesem Fall wird ausschließlich jene der Ladeeinheit 4 benachbarte Förderbahn 50a, 50b in die Spreizstellung verstellt und auf die Seitenwand 83 zugestellt und dabei die Lücke aufgeweitet.

In den gemeinsam beschriebenen Fig. 11 und 12 ist aus dem Beladungsmuster ersichtlich, dass sich zwischen der zweiten und dritten Reihe gestapelter Ladeeinheiten 4 ein aus dem Sicherheitsabstand 82 resultierender Abstandsspalt 85 ergibt. Dies tritt ein, wenn der Ladestapel 3 von unten nach oben und jede Ladestapellage von hinten nach vorne und von links nach rechts oder von rechts nach links auf dem Ladungsträger 2 aufgebaut wird.

Um eine optimierte Volumenausnutzung zu erreichen, ist es nun vorgesehen, dass die Förderbahnen 50a, 50b in z-Richtung in eine Beladestellung (Fig. 11) ausgefahren werden und anschließend die linke Förderbahn 50a in die Spreizstellung (Fig. 12) bewegt wird. Dabei werden die Ladeeinheiten 4 der dritten Reihe gegen die Ladeeinheiten 4 der zweiten Reihe angedrückt und der Abstandsspalt 85 auf annähernd Null minimiert. In der Spreizstellung sind die Förderbahnen 50a, 50b in x-Richtung auf den Abstand 53 eingestellt.

Danach wird die linke Förderbahn 50a wieder in x-Richtung in ihre Beladestellung zurückgefahren, wie in Fig. 12 in strichlierten Linien eingetragen. Sodann wird eine Ladeeinheit 4 von der Beschickungsfördereinrichtung 17 auf die Positioniterfördereinrichtung 16 übergeben und über die Fördermittel 71 bis an die festgelegte z-Position im Ladestapel 3 gefördert und in oben beschriebener Weise an dieser Position an die Ladeebene 80 (nicht eingetragen) abgegeben.

In einer anderen, nicht gezeigten Ausführung werden zur Verringerung des Abstandsspaltes 85 zwischen den Ladeeinheiten 4, die Förderbahnen 50a, 50b auf den Abstand 53 eingestellt und danach unter Berücksichtigung des Sicherheitsabstandes 82 mit der Ladeeinheit 4 in z-Richtung ausgefahren, bis die Ladeeinheit 4 die vorgesehene z-Position erreicht und anschließend durch eine Bewegung der Förderbahnen 50a, 50b in x-Richtung diese Ladeeinheit 4 mit ihrer Seitenwand 83 gegen die bereits in der Stapellage vorhandene Ladeeinheit 4 seitlich angedrückt.

Der Abstand 53 wird vom Rechnersystem gemäß obigen Ausführungen anhand zumindest einer Fördereigenschaft der Ladeeinheit 4 und/oder einer Stapeleigenschaft bzw. eines Beladungsmusters im Ladestapel 3, insbesondere einer Lückenweite 81 einer Stapellücke automatisch eingestellt.

Wie in Fig. 13 dargestellt, ist die oben beschriebene Vorrichtung 1 auch für eine manuelle Beladung eines Ladungsträgers 2 mit den Ladeeinheiten 4 geeignet. Zwischen der Hubstation 6 und der Vorrichtung 1 ist der Kommissionierplatz 12 vorgesehen, an dem eine Kommissionierperson arbeitet und die vereinzelt an der Positionierfördereinrichtung 16 mittels der Förderbahnen 50a, 50b angelieferten Ladeeinheiten 4 von einer gezeigten Bereitstellungsposition entnimmt und auf den Ladungsträger 2 oder eine bereits gestapelte Lage ablegt. Dabei wird wieder in vorteilhafter Weise ein Abstand zwischen den Förderbahnen 50a, 50b eingestellt, der aus der Fördereigenschaft der zu stapelnden Ladeeinheit ermittelt wird. Bei der manuellen Beladung ist es wichtig, dass der Abstand (nicht eingetragen) zwischen den Förderbahnen 50a, 50b so eingestellt, dass einerseits eine zuverlässige Förderung/Bereitstellung der Ladeeinheiten 4 auf den Förderbahnen 50a, 50b und andererseits der Kommissionierperson eine komfortable Manipulation unter Beachtung streng ergonomischer Anforderungen möglich ist. Daher können bei der Berechnung des Abstandes zwischen den Fördervorrichtungen 40a, 40b und Förderbahnen 50a, 50b zusätzlich oder alternativ zu den Fördereigenschaften auch Manipulationseigenschaften der Ladeeinheiten 4 herangezogen werden, wie beispielsweise das einfache Ergreifen einer auf den Förderbahnen 50a, 50b bereitgestellten Ladeeinheit 4. Während der manuellen Beladung werden die Förderbahnen 50a, 50b ausschließlich in x-Richtung verstellt, sodass die Kommissionierperson die Ladeeinheiten 4 stets an ein und derselben Bereitstellungsposition entnehmen kann. Die Förderbahnen 50a, 50b sind während der manuellen Beladung in eine Parkstellung bewegt, sodass die Kommissionierperson ungehindert am Kommissionierplatz 12 arbeiten kann. Dadurch ist auch im manuellen Betrieb eine effiziente Kommissionierung möglich. Über eine Treppe ist der Kommissionierperson der Zugang zum Kommissionierplatz 12 möglich, welcher sich auf einer Tribüne befindet. Die Förderbahnen 50a, 50b, auf denen eine Ladeeinheit 4 bereitgestellt wird, ist in Greifhöhe, insbesondere in Brust-bis Hüfthöhe der Kommissionierperson angeordnet.

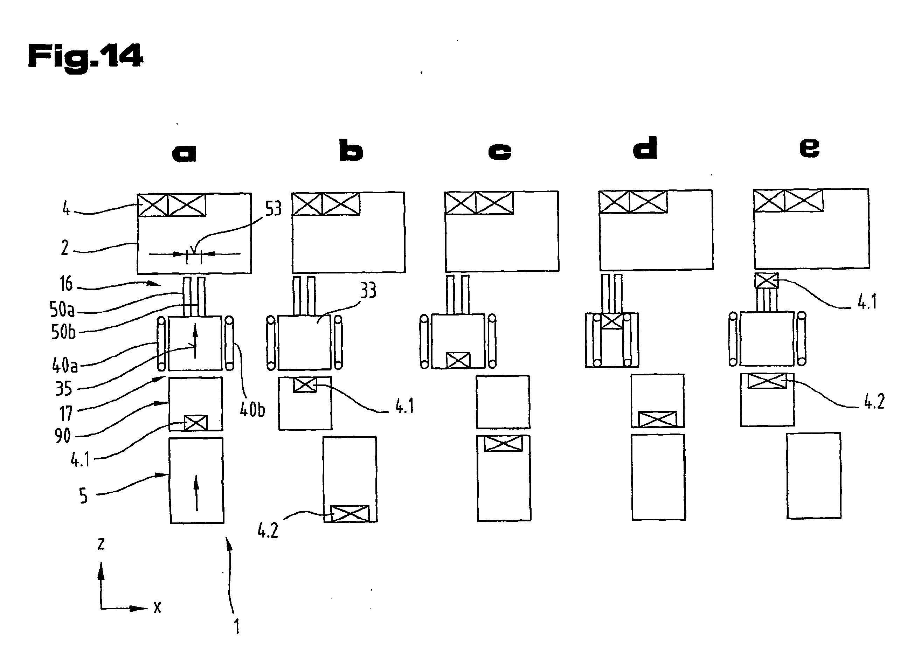

In den Fig. 14a bis 14j ist eine weitere Ausführung der Vorrichtung 1 des erfindungsgemäßen Kommissioniersystems in schematischer Darstellung gezeigt. Die Vorrichtung 1 zum Beladen eines Ladungsträgers 2 mit einen Ladestapel 3 bildenden Ladeeinheiten 4 unterscheidet sich gegenüber der in den vorangegangen Fig. beschriebenen Ausführung dadurch, dass ferner zwischen der ortsfesten Zuführeinrichtung 5 und der in x-Richtung verstellbaren Beschikkungsfördereinrichtung 17 eine Zuteilfördereinrichtung 90 angeordnet ist. Die Positionierfördereinrichtung 16 der Vorrichtung 1 ist entweder gemäß der vorangegangenen Ausführung getrennt von der Beschickungsfördereinrichtung 17 ausgebildet, jedoch synchron mit der Beschickungsfördereinrichtung 17 in x-Richtung (gekoppelte Verstellbewegung) verstellbar, oder über eine nicht dargestellte erste Verstellvorrichtung auf dem Tragrahmen des Stellwagens 20 der Beschickungsfördereinrichtung 17 gelagert und mit dieser gemeinsam in x-Richtung verstellbar. Über eine zweite Verstellvorrichtung kann wiederum der Abstand 53 in oben beschriebener Weise eingestellt werden.

Nach gezeigter Ausführung werden die Positionierfördereinrichtung 16 und Beschickungsfördereinrichtung 17 als eine Baueinheit gemeinsam in x-Richtung verstellt.

Wie in den Fig. schematisch eingetragen, weist die Vorrichtung 1 wiederum die Ausrichtvorrichtung 18 auf, welche die in Förderrichtung 35 der Ladeeinheiten 4 mit Abstand parallel zueinander angeordneten Seitenführungen, beispielsweise Fördervorrichtungen 40a, 40b oder Zentriervorrichtungen und dgl., umfasst, mittels welcher eine Ladeeinheit 4 auf und relativ zum Bandförderer 33 in x-Richtung positioniert bzw. zentriert werden kann.

Die Zuteilfördereinrichtung 90 ist beispielsweise durch einen Rollförderer, Bandförderer und dgl. gebildet und ist über eine nicht eingetragene Verstellvorrichtung entlang einer Führungsanordnung zwischen einer Übernahmestellung und einer Übergabestellung in x-Richtung verstellbar auf einem Grundrahmen gelagert.

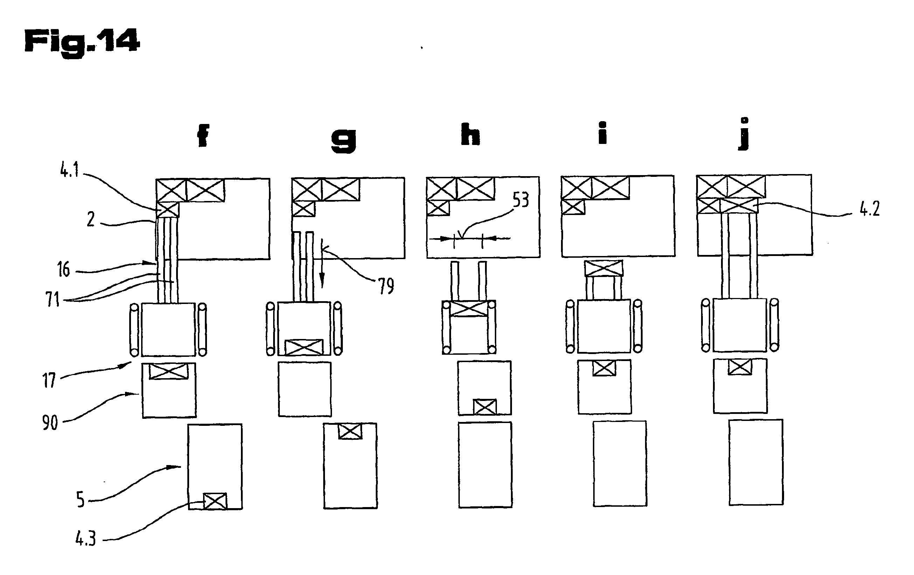

Im Nachfolgenden wird unter Bezugnahme auf die Sequenzdarstellung von Fig. 14 der automatische Beladevorgang der Ladeeinheiten 4 auf dem Ladungsträger 2 erläutert:

In Fig. 14a wird die erste Ladeeinheit 4.1 von der ortsfesten Zuführeinrichtung 5 auf die in die Übernahmestellung in x-Richtung verstellte Zuteilfördereinrichtung 90 gefördert. Danach wird die Zuteilfördereinrichtung 90 in die Übergabestellung in x-Richtung verstellt und die erste Ladeeinheit 4.1 in Richtung zur Beschickungsfördereinrichtung 17 bis in eine Übergabeposition gefördert, wie in Fig. 14b gezeigt, daher ist die erste Ladeeinheit 4.1 in x-Richtung positioniert.

Die Positionierung der ersten Ladeeinheit 4.1 in x-Richtung erfolgt in einem ersten Beladezyklus derart, dass sich die Ladeeinheit 4.1 in der Übergabeposition bereits in der durch das Rechnersystem festgelegten Beladeposition im Ladestapel 3 in x-Richtung befindet, wie in Fig. 14b gezeigt. Ebenso sind die Positionier- und Beschickungsfördereinrichtung 16, 17 in x-Richtung positioniert und die Förderbahnen 50a, 50b auf den oben beschriebenen Abstand 53 eingestellt und so unterhalb der Beschickungsfördereinrichtung 17 positioniert, dass die erste Ladeeinheit 4.1 relativ zu den Förderbahnen 50a, 50b mittig übergeben werden kann.

Wie aus den Fig. 14c-d ersichtlich, wird die erste Ladeeinheit 4.1 von der Zuteilfördereinrichtung 90 auf die Beschickungsfördereinrichtung 17 gefördert und bevorzugt zwischen den Seitenführungen, beispielsweise Fördervorrichtungen 40a, 40b, in x-Richtung ausgerichtet. Nach erfolgter Übergabe der ersten Ladeeinheit 4.1 wird die Zuteilfördereinrichtung 90 aus ihrer Übergabestellung in die Übernahmestellung in x-Richtung verfahren und von ihr eine zweite Ladeeinheit 4.2 übernommen.

Wie in Fig. 14e gezeigt, wird die gegebenenfalls ausgerichtete, erste Ladeeinheit 4.1 von der in die Übernahmestellung verstellten Positionierfördereinrichtung 16 übernommen.

Nachdem die erste Ladeeinheit 4.1 von der Positionierfördereinrichtung 16 übernommen wurde, werden die Förderbahnen 50a, 50b aus ihrer in Fig. 14e gezeigten Übernahmestellung in z-Richtung in die in Fig. 14f gezeigte Beladestellung ausgefahren, in welcher sich die auf den Fördermitteln 71 aufliegende Ladeeinheit 4 oberhalb ihrer vorgesehenen x- und z-Beladeposition im Ladestapel 3 befindet. Anschließend kann durch eine Bewegung der Förderbahnen 50a, 50b in x-Richtung diese Ladeeinheit 4.1 mit ihrer Seitenwand gegen einen Wandteil einer Ladehilfe (nicht gezeigt) seitlich angedrückt werden.

Danach werden die Förderbahnen 50a, 50b zusammen mit den Fördermitteln 71 in Rückfahrrichtung 79 eingefahren, wobei gleichzeitig die Fördermittel 71 auflageseitig entgegen der Rückfahrrichtung 79 in Förderrichtung 35 der Ladeeinheit 4.1 angetrieben werden. Die Ladeeinheit 4.1 wird dabei in oben beschriebener Weise auf den Ladungsträger 2 oder einer Stapellage abgelegt.

Der erste Beladezyklus ist beendet, wenn die Ladeeinheit 4.1 abgelegt wurde und die Fördermittel 71 vollständig unter der Ladeeinheit 4.1 fortbewegt sind.

Wie aus den Sequenzdarstellungen ersichtlich, wird bereits während des Beladezyklus der ersten Ladeeinheit 4.1 der Beladezyklus der zweiten Ladeeinheit 4.2 gestartet.

Im zweiten Beladezyklus wird vorerst auf der Zuführeinrichtung 5 eine zweite Ladeeinheit 4.2 angefördert/bereitgestellt und währenddessen die Zuteilfördereinrichtung 90 aus ihrer in Fig. 14b gezeigten Übergabestellung in die in Fig. 14c gezeigten Übernahmestellung in x-Richtung verstellt. In der Übernahmestellung wird die zweite Ladeeinheit 4.2 von der Zuführeinrichtung 5 auf die Zuteilfördereinrichtung 90 gefördert. Befindet sich die zweite Ladeeinheit 4.2 auf der Zuteilfördereinrichtung 90 wird diese neuerlich in die Übergabestellung verfahren und die zweite Ladeeinheit 4.2 in Richtung zur Beschickungsfördereinrichtung 17 bis in eine Übergabeposition gefördert, wie in Fig. 14e gezeigt.

Die Positionierung der zweiten Ladeeinheit 4.2 in x-Richtung erfolgt im zweiten Beladezyklus derart, dass sich die zweite Ladeeinheit 4.2 in der Übergabeposition noch nicht in der durch das Rechnersystem festgelegten Beladeposition im Ladestapel 3 in x-Richtung befindet. Wie der Fig. 14f entnommen werden kann, wird die Zuteilfördereinrichtung 90 in x-Richtung in die Übergabestellung bewegt, in welcher sich die zweite Ladeeinheit 4.2 in der Übergabeposition befindet, die der durch das Rechnersystem für die erste Ladeeinheit 4.1 festgelegten Beladeposition im Ladestapel 3 in x-Richtung entspricht. Demnach ist die Übergabeposition unabhängig von der späteren Beladeposition der zweiten Ladeeinheit 4.2 im Ladestapel 3 in x-Richtung.

Wie in Fig. 14g gezeigt, erfolgt die Übergabe der zweiten Ladeeinheit 4.2 von der Zuteilfördereinrichtung 90 auf die Beschickungsfördereinrichtung 17 während dem Beladevorgang der ersten Ladeeinheit 4.1, daher während dem Ausfahren der Förderbahnen 50a, 50b mit der ersten Ladeeinheit 4.1 in die Beladestellung und/oder Einfahren der Förderbahnen 50a, 50b in die Übernahmestellung und Abgabe der ersten Ladeeinheit 4.1 auf die Ladeebene.

Befindet sich die zweite Ladeeinheit 4.2 auf der Beschickungsfördereinrichtung 17, wird diese durch eine Verstellbewegung der Beschickungsfördereinrichtung 17 in die festgelegte Beladeposition in x-Richtung befördert und von den Seitenführungen , beispielsweise Fördervorrichtungen 40a, 40b, ausgerichtet, wie in Fig. 14h gezeigt. Ebenso wird die Positionierfördereinrichtung 16 in x-Richtung positioniert und die Förderbahnen 50a, 50b auf den oben beschriebenen Abstand 53 eingestellt und so unterhalb der Beschickungsfördereinrichtung 17 positioniert, dass die zweite Ladeeinheit 4.1 relativ zu den Förderbahnen 50a, 50b auf die in die Übernahmestellung verstellte Positionierfördereinrichtung 16 mittig übergeben werden kann.

Wie aus den Sequenzdarstellungen ersichtlich, wird bereits während des Beladezyklus der zweiten Ladeeinheit 4.2 der Beladezyklus der dritten Ladeeinheit 4.3 gestartet.

Dabei wird die Zuteilfördereinrichtung 90 nach der Übergabe der zweiten Ladeeinheit 4.2 auf die Beschickungsfördereinrichtung 17 aus ihrer Übergabestellung (Fig. 14g) in die Übernahmestellung (Fig. 14h) in x-Richtung verfahren und von ihr eine dritte Ladeeinheit 4.3 übernommen, wie in Fig. 14h dargestellt. Befindet sich die dritte Ladeeinheit 4.3 auf der Zuteilfördereinrichtung 90, verfährt diese neuerlich in die Übergabestellung, in der sich die dritte Ladeeinheit 4.3 in der Übergabeposition befindet, wie in Fig. 14i dargestellt Dabei ist die Übergabeposition entweder durch die Beladeposition der aktuell geförderten Ladeeinheit 4.3 oder vorangegangen Ladeeinheit 4.2 oder durch die Ist-Position der Beschickungsfördereinrichtung 17 in x-Richtung festgelegt.

Dieser Vorgang bzw. die Beladezyklen wiederholen sich so lange, bis der Ladestapel 3 auf einer oder mehreren Ladungsträgern 2 zu einem Kundenauftrag fertig gestellt wurde.

Nachdem die Übergabeposition entweder durch die Beladeposition der aktuell geförderten Ladeeinheit oder vorangegangen Ladeeinheit vom Rechnersystem erfasst oder durch die Ist-Position der Beschickungsfördereinrichtung 17 in x-Richtung vorgegeben wird, kann auch die Übergabestellung der Zuteilfördereinrichtung 90 vom Rechnersystem festgelegt und die Zuteilfördereinrichtung 90 in diese verfahren werden.

Wird die Übergabeposition für eine Ladeeinheit durch die Ist-Position der Beschickungsfördereinrichtung 17 in x-Richtung vorgegeben, wird der Verfahrweg der Beschicküngsfördereinrichtung 17 in x-Richtung erfasst und die Zuteilfördereinrichtung 90 anhand der erfassten Ist-Position relativ zur Beschickungsfördereinrichtung 17 verfahren und dabei die Ladeeinheit in x-Richtung in der Übergabeposition bereitgestellt. Die Erfassung des Verfahrweges erfolgt über ein nicht weiter dargestelltes Wegmesssystem, mittels welchem die Ist-Position des Stellwagens 20 sensorisch erfasst wird. Das Wegmesssystem ist durch einen an sich bekannten kapazitiven Wegaufnehmer, induktiven Wegaufnehmer, magnetischen Wegaufnehmer oder optoelektronischen Wegaufnehmer gebildet. Dabei macht man sich das Messverfahren der absoluten oder inkrementalen Wegmessung zu nutze.

Andererseits kann auch der Stellmotor 31 für den Verstellwagen 20 beispielsweise mit einem Resolver bzw. Inkrementalgeber als Positioniersystem versehen werden, mittels dem die Ist-Position des Stellwagens 20 permanent erfasst wird.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

### Bezugszeichenaufstellung

| | | | |
|---|---|---|---|
| 1 | Vorrichtung | 40b | Fördervorrichtung |
| 2 | Ladungsträger | 41a | Antriebsmotor |
| 3 | Ladestapel | 41b | Antriebsmotor |
| 4 | Ladeeinheit | 42 | Breite |
| 5 | Zuführeinrichtung | 43 | Stellwagen |
| | | | |
| 6 | Hubstation | 44 | Verstellvorrichtung |
| 7 | Fördertechnik | 45 | Linearführung |
| 8 | Fördertechnik | 46 | Zugmittel |
| 9 | Ladehilfe | 47 | Stellmotor |
| 10 | Hubtisch | 48 | Mitnahmeschlitten |
| | | | |
| 11 | Ladungsträger-Wechseleinrichtung | 49 | |
| 12 | Kommissionierplatz | 50a | Förderbahn |
| 13 | | 50b | Förderbahn |
| 14 | | 51a | Führungsschlitten |
| 15 | | 51b | Führungsschlitten |
| | | | |
| 16 | Positionierfördereinrichtung | 52 | Verstellvorrichtung |
| 17 | Beschickungsfördereinrichtung | 53 | Abstand |
| 18 | Ausrichtvorrichtung | 54 | Linearführung |
| 19 | Beladungsüberwachungseinrichtung | 55 | Querträger |
| 20 | Stellwagen | 56 | Zugmittel |
| | | | |
| 21 | Träger | 57 | Stellmotor |
| 22 | Träger | 58 | Zugmittel |
| 23 | Tragarm | 59 | Stellmotor |
| 24 | Verstellvorrichtung | 60 | Verstellvorrichtung |
| 25 | x-Richtung | 61 | |
| | | | |
| 26 | Grundrahmen | 62 | |
| (fortgesetzt) | | | |
| 27 | Steher | 63 | |
| 28 | Querträger | 64 | |
| 29 | Linearführung | 65a | Zugmittel |
| 30 | Zugmittel | 65b | Zugmittel |
| | | | |
| 31 | Stellmotor | 66 | Verschiebemotor |
| 32 | Mitnahmeschlitten | 67a | Koppelungsschlitten |
| 33 | Bandförderer | 67b | Koppelungsschlitten |
| 34 | Gleitleiste | 68a | Rahmengestell |
| 35 | Förderrichtung | 68b | Rahmengestell |
| | | | |
| 36 | Fördermotor | 69a | Linearführung |
| 37 | Rahmen | 69b | Linearführung |
| 38 | Kragarm | 70 | Ausfahrrichtung |
| 39 | | 71 | Fördermittel |
| 40a | Fördervorrichtung | 72 | Fördermotor |
| | | | |
| 73 | Tragprofil | | |
| 74 | Führungsprofil | | |
| 75 | Verstellvorrichtung | | |
| 76 | Haltearm | | |
| 77 | Stellmotor | | |
| | | | |
| 78 | Abtasteinrichtung | | |
| 79 | Rückfahrrichtung | | |
| 80 | Ladeebene | | |
| 81 | Lückenweite | | |
| 82 | Sicherheitsabstand | | |
| | | | |
| 83 | Seitenwand | | |
| 84 | Wandteil | | |
| 85 | Abstandsspalt | | |
| 86 | Seitenwand | | |
| 90 | Zuteilfördereinrichtung | | |

## Patentansprüche

1. Kommissioniersystem mit einer Vorrichtung (1) zur manuellen oder automatisierten Beladung eines Ladungsträgers (2) mit einen Ladestapel (3) bildenden Ladeeinheiten (4), die eine Positionierfördereinrichtung (16) aufweist, mittels welcher zur manuellen Beladung die Ladeeinheiten (4) auf ihr vereinzelt bereitgestellt werden, oder mittels welcher zur automatisierten Beladung die Ladeeinheiten (4) an den, durch die von einem Rechnersystem festgelegten räumlichen Beladepositionen auf dem Ladestapel (3) abgelegt werden, wobei die Positionierfördereinrichtung (16) über eine Verstellvorrichtung (52) auf einen aus der Fördereigenschaft der zu stapelnden Ladeinheit (4) und/oder aus einer Lückenweite (81) einer Stapellücke in einer Stapellage des Ladestapels (3) ermittelten Abstand (53) zueinander verstellbare Förderbahnen (50a, 50b) aufweist, wobei die Vorrichtung (1) eine ortsfeste Zuführeinrichtung (5) für die Ladeeinheiten (4) aufweist, **dadurch gekennzeichnet, dass** die Vorrichtung (1) ferner eine der Zuführeinrichtung (5) in Förderrichtung (35) der Ladeeinheiten (4) nachgeordnete und in einer Richtung (x-Richtung) horizontal längs des Ladungsträgers (2) quer zur Förderrichtung verstellbare Beschickungsfördereinrichtung (17) zur Förderung der Ladeeinheiten (4) auf die Förderbahnen (50a, 50b) sowie durch eine Verstellvorrichtung in einer Richtung (x-Richtung) horizontal längs des Ladungsträgers (2) quer zur Förderrichtung und relativ zur Beschickungsfördereinrichtung (17) verstellbare Zuteilfördereinrichtung (90) für die Ladeeinheiten (4) aufweist, welche in Förderrichtung (35) der Ladeeinheiten (4, 4.1, 4.2, 4.3) zwischen der Zuführeinrichtung (5) und der Beschickungsfördereinrichtung (17) angeordnet ist.

2. Kommissioniersystem nach Anspruch 1, **dadurch gekennzeichnet, dass** die Beschickungsfördereinrichtung (17) durch eine Verstellvorrichtung (24) in einer Richtung (x-Richtung) horizontal längs des Ladungsträgers (2) und relativ zur Positionierfördereinrichtung (16) verstellbar ist.

3. Kommissioniersystem nach Anspruch 1, **dadurch gekennzeichnet, dass** die Förderbahnen (50a, 50b) in Richtung (z-Richtung) auf den Ladungsträger (2) relativ zur Beschickungsfördereinrichtung (17) über eine Verstellvorrichtung (60) synchron verstellbare Fördermittel (71) aufweist.

4. Kommissioniersystem nach Anspruch 1, **dadurch gekennzeichnet, dass** die Vorrichtung (1) eine die Ladeeinheit (4) in einer Richtung (x-Richtung) horizontal längs des Ladungsträgers (2) positionierende Ausrichtvorrichtung (18) aufweist.

5. Kommissioniersystem nach Anspruch 1, **dadurch gekennzeichnet, dass** die Förderbahnen (50a, 50b) an einem in Förderrichtung (35) der Ladeeinheiten (4) vorderen Ende der Beschickungsfördereinrichtung (17) vorragen und unterhalb dieser angeordnet sind.

6. Kommissioniersystem nach Anspruch 1 oder 5, **dadurch gekennzeichnet, dass** die Förderbahnen (50a, 50b) eine in Förderrichtung (35) der Ladeeinheiten (4) zu deren vorderen Enden geneigt nach unten verlaufende Förderebene ausbilden.

7. Kommissioniersystem nach Anspruch 1 oder 5, **dadurch gekennzeichnet, dass** die Beschickungsfördereinrichtung (17) eine in Förderrichtung (35) der Ladeeinheiten (4) zu ihrem vorderen Ende geneigt nach unten verlaufende Förderebene ausbildet.

8. Kommissioniersystem nach Anspruch 1, **dadurch gekennzeichnet, dass** die Vorrichtung (1) zwischen einer Hubstation (6) zum Anheben und Absenken eines Ladungsträgers (2) und der Beschickungsfördereinrichtung (17) einen Kommissionierplatz (12) aufweist.

9. Kommissioniersystem nach Anspruch 1, **dadurch gekennzeichnet, dass** eine Erfassungseinrichtung zum Erfassen der Fördereigenschaft, wie einer Dimension, Geometrie, Formstabilität, Oberflächenbeschaffenheit und/oder eines Längen / Breiten / Höhenverhältnisses der Ladeeinheit (4) vorgesehen ist.

10. Verfahren zur manuellen oder automatisierten Beladung eines Ladungsträgers (2) mit einen Ladestapel (3) bildenden Ladeeinheiten (4) mit einer Vorrichtung (1) in einem Kommissioniersystem gemäß Anspruch 1, bei dem die Ladeeinheiten (4) zur manuellen Beladung auf einer Positionierfördereinrichtung (16) vereinzelt bereitgestellt, oder die Ladeeinheiten (4) zur automatisierten Beladung mittels einer Positionierfördereinrichtung (16) an den, durch die von einem Rechnersystem festgelegten räumlichen Beladepositionen auf dem Ladestapel (3) abgelegt werden, wobei vor der Übernahme einer Ladeeinheit (4) auf die Positionierfördereinrichtung (16) eine Fördereigenschaft der Ladeeinheit (4) erfasst und über eine Verstellvorrichtung (52) ein aus der Fördereigenschaft der zu stapelnden Ladeinheit (4) ermittelter Abstand (53) zwischen die Positionierfördereinrichtung (16) aufweisenden Förderbahnen (50a, 50b) eingestellt wird.

11. Verfahren zur Beladung eines Ladungsträgers (2) mit einen Ladestapel (3) bildenden Ladeeinheiten (4) mit einer Vorrichtung (1) in einem Kommissioniersystem gemäß Anspruch 1, bei dem mittels einer Positionierfördereinrichtung (16) die Ladeeinheiten (4) an den, durch die von einem Rechnersystem festgelegten räumlichen Beladepositionen auf dem Ladestapel (3) abgelegt werden, wobei von einer Stapellücke in einer Stapellage des Ladestapels (3) eine Lückenweite (81) erfasst und über eine Verstellvorrichtung (52) ein aus der Lückenweite (81) ermittelter Abstand (53) zwischen die Positionierfördereinrichtung (16) aufweisenden Förderbahnen (50a, 50b) eingestellt wird.

12. Verfahren nach Anspruch 10 oder 11, **dadurch gekennzeichnet, dass** beim Beladen des Ladungsträgers (2) die Förderbahnen (50a, 50b) mit einer auf ihnen auflastenden Ladeeinheit (4) bis oberhalb der Beladeposition ausfahren, die Ladeeinheit (4) auf den Ladungsträger (2) übergeben und wieder zurückfahren, wobei eine Förderebene von Fördermitteln (71) während des Zurückfahrens der Förderbahnen (50a, 50b) entgegen einer Rückfahrrichtung (79) bewegt und dabei die Ladeeinheit (4) ohne Relativverschiebung zur Förderebene an die festgelegte Beladeposition abgegeben wird.

13. Verfahren nach Anspruch 10 oder 11, **dadurch gekennzeichnet, dass** beim Beladen des Ladungsträgers (2) die Förderbahnen (50a, 50b) bis oberhalb der Beladeposition für die Ladeeinheit (4) verstellt und danach zumindest eine Förderbahn (50a, 50b) in der Richtung (x-Richtung) horizontal längs des Ladungsträgers (2) und relativ zum Ladungsträger (2) bewegt und dabei gegen eine Seitenwand (83) einer bereits am Ladungsträger (2) vorhandenen Ladeeinheit (4) gedrückt wird und anschließend eine Ladeeinheit (4) an die Beladeposition bewegt und dort abgegeben wird.

14. Verfahren nach Anspruch 10 oder 11, **dadurch gekennzeichnet, dass** nach der Übernahme einer ersten Ladeeinheit (4.1) auf eine der Positionierfördereinrichtung (16) vorgeordneten Beschickungsfördereinrichtung (17) und deren Beförderung von der Beschickungsfördereinrichtung (17) bis zu einer festgelegten Beladeposition im Ladestapel (3) eine zweite Ladeeinheit (4.2) von einer Zuteilfördereinrichtung (90) relativ zur Beschickungsfördereinrichtung (17) in eine Übergabeposition bewegt wird.

15. Verfahren nach Anspruch 14, **dadurch gekennzeichnet, dass** die Ladeeinheit (4.1, 4.2) von der Zuteilfördereinrichtung (90) in eine, der durch das Rechnersystem festgelegten Beladeposition im Ladestapel (3) in x-Richtung entsprechende Übergabeposition bewegt wird.

16. Verfahren nach Anspruch 14, **dadurch gekennzeichnet, dass** die Ladeeinheit (4.1, 4.2) von der Zuteilfördereinrichtung (90) in eine, der durch das Rechnersystem für eine Ladeeinheit (4.1, 4.2) des vorangegangen Beladezyklus festgelegten Beladeposition im Ladestapel (3) in x-Richtung entsprechende Übergabeposition bewegt wird.

## Claims

1. Consignment system with a device (1), operated manually or on an automated basis, for loading a freight carrier (2) with freight units (4) forming a freight stack (3), which has a positioning conveyor unit (16) by means of which the freight units (4) are placed in readiness for manually loading onto it individually, or by means of which the freight units (4) are deposited on the freight stack (3) at three-dimensional loading positions set by a computer system for loading on an automated basis, which positioning conveyor unit (16) has conveyor tracks (50a, 50b) which can be adjusted relative to one another by means of a displacement device (52) to a distance (53) determined on the basis of the conveying property of the freight unit (4) to be stacked and/or a gap width (81) of a stack gap in a stack position of the freight stack (3), and the device (1) has a stationary feeding system (5) for the freight units (4), **characterised in that** the device (1) also has a feeding conveyor system (17) disposed downstream of the feeding system (5) in the conveying direction (35) of the freight units (4) which can be moved in one direction (x direction) horizontally alongside the freight carrier (2) transversely to the conveying direction for conveying the freight units (4) onto the conveyor tracks (50a, 50b) and a distributor conveyor system (90) for the freight units (4) which can be moved in one direction (x direction) by means of a displacement device horizontally alongside the freight carrier (2) transversely to the conveying direction and relative to the feeding conveyor system (17), which is disposed between the feeding system (5) and the feeding conveyor system (17) in the conveying direction (35) of the freight units (4, 4.1, 4.2, 4.3).

2. Consignment system as claimed in claim 1, **characterised in that** the feeding conveyor system (17) can be moved in one direction (x direction) by means of a displacement device (24) horizontally alongside the freight carrier (2) and relative to the positioning conveyor unit (16)

3. Consignment system as claimed in claim 1, **characterised in that** the conveyor tracks (50a, 50b) have conveyor means (71) which can be moved synchronously in the direction (z direction) towards the freight carrier (2) relative to the feeding conveyor system (17) by means of a displacement device (60).

4. Consignment system as claimed in claim 1, **characterised in that** the device (1) has an orienting device (18) which positions the freight unit (4) in one direction (x direction) horizontally alongside the freight carrier (2).

5. Consignment system as claimed in claim 1, **characterised in that** the conveyor tracks (50a, 50b) project out from a front end of the feeding conveyor system (17) in the conveying direction (35) of the freight units (4) and are disposed underneath it.

6. Consignment system as claimed in claim 1 or 5, **characterised in that** the conveyor tracks (50a, 50b) constitute a conveyor plane extending in a downwards incline towards their front ends in the conveying direction (35) of the freight units (4).

7. Consignment system as claimed in claim 1 or 5, **characterised in that** the feeding conveyor system (17) constitutes a conveyor plane extending in a downwards incline towards its front end in the conveying direction (35) of the freight units (4).

8. Consignment system as claimed in claim 1, **characterised in that** the device (1) has a consignment area (12) between a lifting station (6) for raising and lowering a freight carrier (2) and the feeding conveyor system (17).

9. Consignment system as claimed in claim 1 or 2, **characterised in that** a detection system is provided as a means of detecting the conveying property of the freight unit (4), such as a dimension, geometry, dimensional stability, surface properties and/or a length/width/height ratio.

10. Method of loading, manually or on an automated basis, a freight carrier (2) with freight units (4) forming a freight stack (3) with a device (1) in a consignment system as claimed in claim 1, whereby the freight units (4) are individually placed on a positioning conveyor unit (16) in readiness for manual loading, or the freight units (4) are deposited on the freight stack (3) by means of a positioning conveyor unit (16) in three-dimensional loading positions set by a computer system for automated loading, **characterised in that**, and before a freight unit (4) is transferred to the positioning conveyor unit (16), a conveying property of the freight unit (4) is detected and a distance (53) between the conveyor tracks (50a, 50b) incorporating the positioning conveyor unit (16) determined form the conveying property of the freight unit (4) to be stacked is set by means of a displacement device (52).

11. Method of loading a freight carrier (2) with freight units (4) forming a freight stack (3) with a device (1) in a consignment system as claimed in claim 1, whereby the freight units (4) are deposited on the freight stack (3) in three-dimensional loading positions set by a computer system by means of a positioning conveyor unit (16), and a gap width (81) is detected from a stack gap in a stack position of the freight stack (3) and a distance (53) between conveyor tracks (50a, 50b) incorporating the positioning conveyor unit (16) determined on the basis of the gap width (81) is set by means of a displacement device (52).

12. Method as claimed in claim 10 or 11, **characterised in that** during loading of the freight carrier (2), the conveyor tracks (50a, 50b) with a freight unit (4) supported on them are moved out to a position above the loading position, the freight unit (4) is transferred to the freight carrier (2) and they are then moved back again, and a conveyor plane of the conveyor means (71) is moved opposite a reverse direction (79) as the conveyor tracks (50a, 50b) are moved back, as a result of which the freight unit (4) is transferred to the set loading position without any displacement relative to the conveyor plane.

13. Method as claimed in claim 10 or 11, **characterised in that**, during loading of the freight carrier (2), the conveyor tracks (50a, 50b) are moved to a position above the loading position for the freight unit (4) and then at least one conveyor track (50a, 50b) is moved in the direction (x direction) horizontally alongside the freight carrier (2) and relative to the freight carrier (2), during which a freight unit (4) already disposed on the freight carrier (2) is pushed against a side wall (83) and a freight unit (4) is then moved to the loading position and deposited there.

14. Method as claimed in claim 10 or 11, **characterised in that**, after a first freight unit (4.1) has been transferred to a feeding conveyor system (17) disposed upstream of the positioning conveyor unit (16) and has been conveyed by the feeding conveyor system (17) to a set loading position in the freight stack (3), a second freight unit (4.2) is moved by a distributor conveyor system (90) relative to the feeding conveyor system (17) into a transfer position.

15. Method as claimed in claim 14, **characterised in that** the freight unit (4.1, 4.2) is moved by the distributor conveyor system (90) into a transfer position corresponding to the loading position in the freight stack (3) in the x direction set by the computer system.

16. Method as claimed in claim 14, **characterised in that** the freight unit (4.1, 4.2) is moved by the distributor conveyor system (90) into a transfer position corresponding to the loading position in the freight stack (3) in the x direction set by the computer system for a freight unit (4.1, 4.2) of the preceding loading cycle.

## Revendications

1. Système de préparation de commandes avec un dispositif (1) permettant le chargement manuel ou automatisé d'un support de chargement (2) avec des unités de chargement (4) formant des piles de chargement (3), qui comprend un convoyeur de positionnement (16) permettant de préparer individuellement les unités de chargement (4) pour un chargement manuel ou permettant de déposer les unités de chargement (4) aux coordonnées spatiales déterminées par un système informatique sur la pile de chargement (3), pour un chargement automatisé, le convoyeur de positionnement (16) comprenant des pistes de convoyage (50a, 50b) réglables l'une par rapport à l'autre à l'aide d'un dispositif de réglage (52) à une distance (53) déterminée à partir des caractéristiques de convoyage de l'unité de chargement (4) à empiler et/ou à partir d'une largeur (81) d'un intervalle d'empilement dans une couche d'empilement de la pile de chargement (3), le dispositif (1) comprenant un dispositif d'amenée fixe (5) pour les unités de chargement (4), **caractérisé en ce que** le dispositif (1) comprend en outre un convoyeur d'alimentation (17), disposé en aval du dispositif d'alimentation (5) dans le sens de convoyage (35) des unités de chargement (4) et réglable dans une direction (direction x) horizontale le long du support de chargement (2) perpendiculairement à la direction d'alimentation pour le convoyage des unités de chargement (4) sur les pistes de convoyage (50a, 50b) ainsi qu'un convoyeur de distribution (90) pour les unités de chargement (4), réglable à l'aide d'un dispositif de réglage dans une direction (direction x) horizontale le long du support de chargement (2) perpendiculairement à la direction d'alimentation et par rapport au convoyeur d'alimentation (17), et qui est disposé dans le sens du convoyage (35) des unités de chargement (4, 4.1, 4.2, 4.3) entre le dispositif d'amenée (5) et le convoyeur d'alimentation (17).

2. Système de préparation de commandes selon la revendication 1, **caractérisé en ce que** le convoyeur d'alimentation (17) est réglable par un dispositif de réglage (24) dans une direction (direction x) horizontale le long du support de chargement (2) et par rapport au convoyeur de positionnement (16).

3. Système de préparation de commandes selon la revendication 1, **caractérisé en ce que** les pistes de convoyage (50a, 50b) comprennent des moyens de convoyage (71) réglables de manière synchrone à l'aide d'un dispositif de réglage (60) dans la direction (direction z) du support de chargement (2) par rapport au convoyeur d'alimentation (17).

4. Système de préparation de commandes selon la revendication 1, **caractérisé en ce que** le dispositif (1) comprend un dispositif d'alignement (18) positionnant l'unité de chargement (4) dans une direction (direction x) horizontale le long du support de chargement (2).

5. Système de préparation de commandes selon la revendication 1, **caractérisé en ce que** les pistes de convoyage (50a, 50b) dépassent au niveau d'une extrémité avant du convoyeur d'alimentation (17) dans le sens de convoyage (35) des unités de chargement (4) et sont disposées en dessous de celle-ci.

6. Système de préparation de commandes selon la revendication 1 ou 5, **caractérisé en ce que** les pistes de convoyage (50a, 50b) forment un plan de convoyage incliné vers le bas en direction de leurs extrémités avant dans le sens de convoyage (35) des unités de chargement (4).

7. Système de préparation de commandes selon la revendication 1 ou 5, **caractérisé en ce que** le convoyeur d'alimentation (17) forme un plan de convoyage incliné vers le bas en direction de leur extrémité avant dans le sens de convoyage (35) des unités de chargement (4).

8. Système de préparation de commandes selon la revendication 1, **caractérisé en ce que** le dispositif (1) comprend, entre une station de levage (6), permettant de lever et de baisser un support de chargement (2), et le convoyeur d'alimentation (17), un poste de préparation de commandes (12).

9. Système de préparation de commandes selon la revendication 1, **caractérisé en ce qu'**un dispositif de saisie est prévu, qui permet de déterminer les caractéristiques de convoyage, comme les dimensions, la géométrie, la rigidité, la qualité de la surface et/ou les rapports longueur / largeur / hauteur de l'unité de chargement (4).

10. Procédé de chargement manuel ou automatisé d'un support de chargement (2) avec des unités de chargement (4) formant des piles de chargement (3), avec un dispositif (1) dans un système de préparation de commandes selon la revendication 1, dans lequel, pour un chargement manuel, les unités de chargement (4) sont préparées individuellement sur un convoyeur de positionnement (16) ou, pour un chargement automatisé à l'aide d'un convoyeur de positionnement (16), les unités de chargement (4) sont déposées à l'aide d'un convoyeur de positionnement (16), aux positions spatiales de chargement déterminées par un système calculateur, sur la pile de chargement (3), une propriété de convoyage de l'unité de chargement (4) étant saisie avant la prise en charge d'une unité de chargement sur le convoyeur de positionnement (16) et une distance (53), déterminée à partir de la propriété de convoyage de l'unité de chargement (4) à empiler, entre les pistes de convoyage (50a, 50b) comprenant le convoyeur de positionnement (16), étant réglée à l'aide d'un dispositif de réglage (52).

11. Procédé de chargement d'un support de chargement (2) avec des unités de chargement (4) formant une pile de chargement (3), avec un dispositif (1) dans un système de préparation de commandes selon la revendication 1, dans lequel, à l'aide d'un convoyeur de positionnement (16), les unités de chargement (4) sont déposées, aux positions de chargement spatiales déterminées par un système caluculateur, sur la pile de chargement (3), une largeur d'intervalle (81) étant saisie a partir d'un intervalle d'empilement dans une couche d'empilement de la pile de chargement (3) et une distance (53), déterminée à partir de la largeur d'intervalle (81), entre les pistes de convoyage (50a, 50b) comprenant le convoyeur de positionnement (16), est réglée à l'aide d'un dispositif de réglage (52).

12. Procédé selon la revendication 10 ou 11, **caractérisé en ce que**, lors du chargement du support de chargement (2), les pistes de convoyage (50a, 50b) sortent avec une unité de chargement (4) chargée sur elles jusqu'au-dessus de la position de chargement, transfèrent l'unité de chargement (4) sur le support de chargement (2) et reviennent, un plan de convoyage étant déplacé par des moyens de convoyage (71) pendant le retour des pistes de convoyage (50a, 50b) à l'encontre d'une direction de retour (79) et l'unité de chargement (4) étant alors transférée vers la position de chargement déterminée sans déplacement relatif par rapport au plan de convoyage.

13. Procédé selon la revendication 10 ou 11, **caractérisé en ce que**, lors du chargement du support de chargement (2), les pistes de convoyage (50a, 50b) sont déplacées jusqu'au-dessus de la position de chargement pour l'unité de chargement (4) puis au moins une piste de convoyage (50a, 50b) est déplacée dans la direction (direction x) horizontale le long du support de chargement (2) et par rapport au support de chargement (2) et est alors poussée contre une paroi latérale (83) d'une unité de chargement (4) existant déjà sur le support de chargement (2) puis une unité de chargement (4) est déplacée vers la position de chargement et y est déposée.

14. Procédé selon la revendication 10 ou 11, **caractérisé en ce que**, après la prise en charge d'une première unité de chargement (4.1) sur un convoyeur d'alimentation (17) placé avant le convoyeur de positionnement (16) et après son convoyage du convoyeur d'alimentation (17) jusqu'à une position de chargement déterminée dans la pile de chargement (3), une deuxième unité de chargement (4.2) est déplacée par un convoyeur de distribution (90) par rapport au convoyeur d'alimentation (17) vers une position de transfert.

15. Procédé selon la revendication 14, **caractérisé en ce que** l'unité de chargement (4.1, 4.2) est déplacée par le convoyeur de distribution (90) dans la direction x vers une position de transfert correspondant à la position de chargement dans la pile de chargement (3), déterminée par le système calculateur.

16. Procédé selon la revendication 14, **caractérisé en ce que** l'unité de chargement (4.1, 4.2) est déplacée par le convoyeur de distribution (90) dans la direction x vers une position de transfert correspondant à la position de chargement dans la pile de chargement (3), déterminée par le système calculateur pour une unité de chargement (4.1, 4.2) du cycle de chargement précédent.
